# EUROPÄISCHE PATENTSCHRIFT

(11) **EP 3 957 034 B1**
(45) Veröffentlichungstag und Bekanntmachung des Hinweises auf die Patenterteilung: **02.08.2023**
(21) Anmeldenummer: 20717857.5
(22) Anmeldetag: 08.04.2020
(51) Int. Cl.: H04L 12/417, H04L 12/40

(54) **TEILNEHMERSTATION FÜR EIN SERIELLES BUSSYSTEM UND VERFAHREN ZUR KOMMUNIKATION IN EINEM SERIELLEN BUSSYSTEM**
SUBSCRIBER STATION FOR A SERIAL BUS SYSTEM, AND METHOD FOR COMMUNICATING IN A SERIAL BUS SYSTEM
POSTE D'ABONNÉ POUR UN SYSTÈME DE BUS SÉRIE ET PROCÉDÉ DE COMMUNICATION DANS UN SYSTÈME DE BUS SÉRIE

(30) Priorität: 16.04.2019 DE 102019205487
(43) Veröffentlichungstag der Anmeldung: 23.02.2022
(73) Patentinhaber: Robert Bosch GmbH, 70442 Stuttgart (DE)
(72) Erfinder: HARTWICH, Florian, 72762 Reutlingen (DE); MUTTER, Arthur, 73765 Neuhausen (DE)
(86) Internationale Anmeldenummer: PCT/EP2020/060000
(87) Internationale Veröffentlichungsnummer: WO 2020/212217

(56) Entgegenhaltungen:
- EP-A2- 0 952 707
- EP-A2- 1 223 711
- DE-T2- 69 807 235

## Beschreibung

### Technisches Gebiet

Die vorliegende Erfindung betrifft eine Teilnehmerstation für ein serielles Bussystem und ein Verfahren zur Kommunikation in einem seriellen Bussystem, mit welchen eine Kommunikation für echtzeitkritische Anwendungen möglich ist.

### Stand der Technik

Für die Kommunikation zwischen Sensoren und Steuergeräten, beispielsweise in Fahrzeugen, wird aus Kostengründen anstelle einer Punkt-zu-Punkt-Verbindung derzeit immer häufiger ein Bussystem eingesetzt, in welchem Daten als Nachrichten im Standard ISO11898-1:2015 als CAN Protokoll-Spezifikation mit CAN FD übertragen werden. Die Nachrichten werden zwischen den Teilnehmerstationen des Bussystems, wie Sensor, Steuergerät, Geber, usw., übertragen. Hierbei wird CAN FD derzeit in der Einführungsphase im ersten Schritt meist mit einer Daten-Bitrate von 2Mbit/s bei der Übertragung von Bits des Datenfelds und mit einer Arbitrations-Bitrate von 500kbit/s bei der Übertragung von Bits des Arbitrationsfelds im Fahrzeug eingesetzt.

Zur Vermeidung von Kollisionen von Nachrichten verschiedener Teilnehmerstationen am Bus wird bei CAN das CSMA/CR-Verfahren (CR=Collision Resolution) verwendet. Hierdurch werden Kollisionen mit einer sogenannten Arbitration am Anfang einer Nachricht bzw. eines Rahmens aufgelöst. Bei der Arbitration wird ein Identifizierer (Identifier = ID) dahingehend ausgewertet, welche Nachricht als nächstes gesendet werden darf. Hierbei setzt sich die Nachricht bzw. der Rahmen durch, welche den Identifizierer mit der höchsten Priorität hat. Das entspricht einer strikten Prioritäts-Zeitplanung (Strict-Priority Scheduling). Dies ist für viele Anwendungsfälle im autonomen Fahrzeug ausreichend.

Die Arbitration bewirkt jedoch, dass derzeitige CAN-basierte Bussysteme für Anwendungsfälle, die einen 100% deterministischen Buszugriff benötigen, also eine Garantie, dass eine Teilnehmerstation des Bussystems zu einer gewissen Zeit auf jeden Fall eine Nachricht bzw. einen Rahmen senden kann, derzeit nicht verwendbar ist.

DE 898 07 235 T1 offenbart ein deterministisches serielles Busübertragungssystem mit CAN-Protokoll, bei welchem Synchronpulse eines Masterknotens Zeitschlitze definieren. In den Zeitschlitzen werden die Nachrichten unterschiedlicher Teilnehmerstationen des Bussystems gemäß Priorität der Nachricht gesendet.

EP 0 952 707 A2 offenbart ein Bussystem für serielle Datenkommunikation, das in einem Flugzeugsteuersystem für flugkritische Daten verwendbar sein soll.

EP 1 223 711 A2 offenbart ein Verfahren und eine Vorrichtung zum Senden von Daten in einem verteilten Prozessorsystem, wobei eine verspätete Nachricht Priorität über alle zeitlich später anstehenden Nachrichten erhält.

### Offenbarung der Erfindung

Daher ist es Aufgabe der vorliegenden Erfindung, eine Teilnehmerstation für ein serielles Bussystem und ein Verfahren zur Kommunikation in einem seriellen Bussystem bereitzustellen, welche die zuvor genannten Probleme lösen. Insbesondere sollen eine Teilnehmerstation für ein serielles Bussystem und ein Verfahren zur Kommunikation in einem seriellen Bussystem bereitgestellt werden, welche bei einer Kommunikation für echtzeitkritische Anwendungen verwendbar sind und bei denen insbesondere ein 100% deterministischer Buszugriff möglich ist.

Die Aufgabe wird durch eine Teilnehmerstation für ein serielles Bussystem mit den Merkmalen von Anspruch 1 gelöst. Die Teilnehmerstation hat eine Kommunikationssteuereinrichtung zum Steuern einer Kommunikation der Teilnehmerstation mit mindestens einer anderen Teilnehmerstation des Bussystems, eine Sende-/Empfangseinrichtung zum Senden eines von der Kommunikationssteuereinrichtung erzeugten Sendesignals in einem Rahmen auf einen Bus des Bussystems, und eine Zeitplanungseinheit zur Planung eines zeitlichen Zugriffs der Teilnehmerstation auf den Bus in mindestens einem Zeitschlitz einer Runde von zeitlich aufeinanderfolgenden Zeitschlitzen, wobei in einer Runde für jede Teilnehmerstation des Busses zum Senden ihres Sendesignals mindestens ein Zeitschlitz vorgesehen ist und sich die Runde zyklisch wiederholt, und wobei die Zeitplanungseinheit ausgestaltet ist, mit den anderen Teilnehmerstationen des Busses im Betrieb des Bussystems unter Verwendung einer Priorität des Sendesignals festzulegen, welchen Zeitschlitz der Runde die Sende-/Empfangseinrichtung zum Senden des Rahmens für das Sendesignal auf den Bus verwenden darf, wie in Anspruch 1 beschreiben.

In einem Bussystem, an das zuvor beschriebene Teilnehmerstationen angeschlossen sind, wird sichergestellt, dass jede Teilnehmerstation deterministisch auf den Bus
zugreifen kann. Demzufolge erhält jede der Teilnehmerstationen zumindest für die Zeit, in der deterministisch auf den Bus zugegriffen werden soll, eine garantierte minimale Kommunikationsbandbreite am Bus. Damit lassen sich echtzeitkritische Anwendungen auch mit einem CAN-basierten Bussystem realisieren.

Die Teilnehmerstation kann bei jedem Kommunikationsprotokoll, das nach dem CSMA/CR-Verfahren arbeitet, beispielsweise bei jedem CAN-basierten Kommunikationsprotokoll, jedoch insbesondere bei CAN XL, einem CAN FD Nachfolger, zum Einsatz kommen.

Bei der beschriebenen Teilnehmerstation ist auch sehr vorteilhaft, dass die Funktion der deterministischen Zeitplanung, was auch als "deterministisches Scheduling" bezeichnet werden kann, für den deterministischen Buszugriff bei Bedarf aktivierbar ist, auch im laufenden Betrieb. Dadurch ist die Teilnehmerstation zur Durchführung von zwei verschiedenen Kommunikationsverfahren ausgestaltet, nämlich zur Durchführung von entweder einem CSMA/CR-Verfahren, das ein "Strict-Priority Scheduling" realisiert, oder einem CSMA/CR-Verfahren mit zusätzlicher deterministischer Zeitplanung. Dies ist ein großer Vorteil gegenüber Bussystemen, in welchen nur jeweils eines der genannten Kommunikationsverfahren möglich ist, wie beispielsweise 10BASE-T1S, Flexray, usw.. Ein weiterer sehr großer Vorteil ist, dass der hier beschriebene Ansatz wesentlich einfacher in der Konfiguration und Nutzung ist als bei bisherigen Verfahren.

Die beschriebene Teilnehmerstation ist derart ausgestaltet, dass sie mit den anderen Teilnehmerstationen am Bus selbst organisiert, welche Teilnehmerstation die nächste Nachricht senden darf. Dadurch ist die Konfiguration der Teilnehmerstation und des zugehörigen Bussystems selbstorganisierend. Dies gestaltet die Konfiguration sehr unaufwändig. Im Ergebnis entsteht kaum zusätzlicher Einarbeitungsaufwand von Personal zur Konfiguration des Bussystems und der Teilnehmerstation.

Ein zusätzlicher Vorteil der Teilnehmerstation liegt darin, dass kein "Single Point of Failure" möglich ist, wie dies bei dem für 10BASE-T1S notwendigen Masterknoten der Fall ist. Das heißt, wenn eine Teilnehmerstation wegen einem Defekt ausfällt und deshalb nichts mehr sendet, hat das keine negativen Auswirkungen auf die Kommunikation am Bus.

Die Teilnehmerstation kann je nach realisierter Variante der deterministischen Zeitplanung entweder die gleichen maximalen Verzögerungen (Worst-Case Delays) wie PLCA von 10BASE-T1S oder um ca. 50% kürzere maximale Verzögerungen (Worst-Case Delays) als PLCA von 10BAS E-T1S liefern.

Noch dazu ist es möglich, die Teilnehmerstation je nach Anwendung oder Wunsch um viele Zusatzfunktionen zu erweitern, da die Arbitration immer zur Verfügung steht. Beispielsweise ist zum Senden die Nutzung eines ungenutzten Zeitschlitzes einer anderen Teilnehmerstation des Bussystems möglich. Möglich ist auch, dass ein gewichtetes zyklisches Senden (Weighted Round Robin) realisiert ist, bei welchem manche Teilnehmerstationen mehr Nachrichten pro Zyklus bzw. Runde senden dürfen als andere Teilnehmerstationen. Eine andere Option ist, dass eine Teilnehmerstation des Bussystems in ihrem Zeitschlitz, der auch Slot genannt wird, während einer Runde anstatt einer Nachricht maximaler Länge auch mehrere kürzere Nachrichten schicken kann. Dies ermöglicht Fairness hinsichtlich der auf dem Bus verfügbaren Bandbreite, anstatt nur hinsichtlich der Zahl der von jeder Teilnehmerstation gesendeten oder sendbaren Nachrichten.

Als Folge davon kann mit der Teilnehmerstation ein Senden und Empfangen der Nachrichten mit großer Flexibilität im Hinblick auf den Buszugriff realisiert werden und damit lassen sich eine sehr große Palette an Dienstgüteanforderungen und damit auch Anwendungen realisieren.

Vorteilhafte weitere Ausgestaltungen der Teilnehmerstation sind in den abhängigen Ansprüchen angegeben.

Gemäß einer Variante ist die Zeitplanungseinheit ausgestaltet, mit den anderen Teilnehmerstationen des Busses eine Sendereihenfolge auf den Bus für die Teilnehmerstationen des Busses zumindest zeitweise dynamisch und/oder zumindest zeitweise statisch festzulegen.

Gemäß einer speziellen Ausführungsvariante weist die Zeitplanungseinheit ein Zählmodul auf, das ausgestaltet ist, seinen Zählwert bei jedem von dem Bus empfangenen Rahmen zu inkrementieren und bei jeder für einen Zeitschlitz ungenutzt verstrichenen Sendegelegenheit zu inkrementieren, wobei das Zählmodul ausgestaltet ist, seinen Zählwert auf einen Startwert zurückzusetzen, wenn der Zählwert gleich der Anzahl der Zeitschlitze ist, die in der Runde vorgesehen sind.

Hierbei kann das Zählmodul ausgestaltet sein, seinen Zählwert bei jedem von dem Bus empfangenen Rahmen nach Empfang eines Bits zu inkrementieren, welches den Anfang eines Rahmens signalisiert, auch wenn der Rahmen später von der den Rahmen sendenden Teilnehmerstation wegen eines Fehlers abgebrochen wird. Hierbei kann die Zeitplanungseinheit ausgestaltet sein, einen zeitlichen Zugriff der Teilnehmerstation auf den Bus für den nächsten Zeitschlitz der Runde freizugeben, wenn der Zählwert des Zählmoduls gleich der Anzahl der Zeitschlitze ist, die in der Runde vorgesehen sind, und
wobei das Zählmodul ausgestaltet ist, seinen Zählwert auf 1 zu setzen, wenn die Sende-/Empfangseinrichtung ein von der Kommunikationssteuereinrichtung erzeugtes Sendesignal in einem Rahmen oder mindestens ein Bit des Rahmens auf den Bus gesendet hat oder die Sendegelegenheit ungenutzt verstreichen lässt.

Gemäß einem Ausführungsbeispiel ist die Zeitplanungseinheit ausgestaltet, einen zeitlichen Zugriff der Teilnehmerstation auf den Bus in einem Zeitschlitz der Runde freizugeben, wenn die Teilnehmerstation oder eine andere Teilnehmerstation des Busses ihre Sendegelegenheit ungenutzt verstreichen lässt.

Denkbar ist, dass die Kommunikationssteuereinrichtung ausgestaltet ist, zumindest in einer Einschaltphase des Busses den Rahmen in eine erste Kommunikationsphase und eine zweite Kommunikationsphase aufzuteilen, wobei in der ersten Kommunikationsphase ausgehandelt wird, welche der Teilnehmerstationen des Busses in der nachfolgenden zweiten Kommunikationsphase einen zumindest zeitweise exklusiven, kollisionsfreien Zugriff auf den Bus bekommt.

Möglicherweise ist die Anzahl der Zeitschlitze pro Runde größer als die Anzahl der Zeitschlitze, die den Teilnehmerstationen des Busses pro Runde zugeordnet sind, wobei in einem Zeitschlitz, der keiner der Teilnehmerstationen des Busses zugeordnet ist, in der ersten Kommunikationsphase ausgehandelt wird, welche der Teilnehmerstationen des Busses in der nachfolgenden zweiten Kommunikationsphase einen zumindest zeitweise exklusiven, kollisionsfreien Zugriff auf den Bus bekommt.

Optional ist die minimale Dauer eines Zeitschlitzes als eine Bitzeit eines Bits der ersten Kommunikationsphase wählbar. Optional kann die Zeitplanungseinheit ausgestaltet sein, in einem Zeitschlitz, der der Teilnehmerstation zugeordnet ist, einen Rahmen mit einer Priorität zu senden, die höher ist als eine Priorität eines Rahmens, welchen die Zeitplanungseinheit ausgestaltet ist, in einem Zeitschlitz zu senden, der einer anderen Teilnehmerstation des Busses zugeordnet ist.

Denkbar ist alternativ, dass die minimale Dauer eines Zeitschlitzes zwei Bitzeiten eines Bits der ersten Kommunikationsphase ist, wobei die Zeitplanungseinheit ausgestaltet ist, einen zeitlichen Zugriff der Teilnehmerstation auf den Bus in dem zweiten Bit eines Zeitschlitzes der Runde freizugeben, wenn die Teilnehmerstation oder eine andere Teilnehmerstation des Busses in dem ersten Bit des Zeitschlitzes ihre Sendegelegenheit ungenutzt verstreichen lässt.

Möglicherweise ist die Kommunikationssteuereinrichtung ausgestaltet, in dem Sendesignal eine Teilnehmerstation-Nummer anzuordnen, die auf dem Bus exklusiv der Teilnehmerstation zugeordnet ist, wobei die Zeitplanungseinheit zur Freigabe eines zeitlichen Zugriffs der Teilnehmerstation auf den Bus in dem der Teilnehmerstation zugeordneten Zeitschlitz der Runde bereit ist, wenn die Zeitplanungseinheit eine Teilnehmerstation-Nummer in einem von dem Bus empfangenen Rahmen auswerten kann.

In einer Ausgestaltung kann die Anzahl der Zeitschlitze, die der Teilnehmerstation pro Runde zugeordnet sind, zumindest zeitweise ungleich einer Anzahl von Zeitschlitzen sein, die einer anderen Teilnehmerstation des Busses pro Runde zugeordnet sind.

In einer anderen Ausgestaltung kann die Teilnehmerstation ausgestaltet sein, pro Zeitschlitz mehr als einen Rahmen auf den Bus zu senden. Zusätzlich oder alternativ kann die Anzahl der Rahmen, welche die Teilnehmerstation pro Zeitschlitz auf den Bus senden darf, zumindest zeitweise ungleich einer Anzahl von Rahmen sein, die eine andere Teilnehmerstation des Busses pro Zeitschlitz auf den Bus senden darf.

Optional ist die Kommunikationssteuereinrichtung ausgestaltet, am Anfang eines rezessiven Bits in dem der Teilnehmerstation zugeordneten Zeitschlitz einen Dominantpuls zu senden, der kürzer als die Bitzeit des rezessiven Bits ist, wenn die Kommunikationssteuereinrichtung ihre Sendegelegenheit ungenutzt verstreichen lässt.

Gemäß einer anderen Option ist die Teilnehmerstation derart ausgestaltet, dass die Zeitplanungseinheit je nach zeitlichen Anforderungen an die Kommunikation auf dem Bus ein- oder ausschaltbar ist, oder dass ein Betriebsmodus der Zeitplanungseinheit durch Konfiguration von vorbestimmten Parametern im laufenden Betrieb des Bussystems änderbar ist, wobei der Betriebsmodus der Zeitplanungseinheit einen vorbestimmten Modus einer Kommunikation auf dem Bus festlegt.

Zumindest zwei der zuvor beschriebenen Teilnehmerstationen können Teil eines Bussystems sein, das zudem einen Bus umfasst, wobei die mindestens zwei Teilnehmerstationen über den Bus derart miteinander verbunden sind, dass sie seriell miteinander kommunizieren können.

Die zuvor genannte Aufgabe wird zudem durch ein Verfahren zur Kommunikation in einem seriellen Bussystem nach Anspruch 17 gelöst. Das Verfahren wird mit einer Teilnehmerstation des Bussystems ausgeführt, die eine Kommunikationssteuereinrichtung und eine Sende-/Empfangseinrichtung aufweist, wobei das Verfahren die Schritte aufweist, Steuern, mit einer Kommunikationssteuereinrichtung, einer Kommunikation der Teilnehmerstation mit mindestens einer anderen Teilnehmerstation des Bussystems, und Senden, mit einer Sende-/Empfangseinrichtung, eines von der Kommunikationssteuereinrichtung erzeugten Sendesignals in einem Rahmen auf einen Bus des Bussystems gemäß der Planung einer Zeitplanungseinheit, welche einen zeitlichen Zugriff der Teilnehmerstation auf den Bus in mindestens einem Zeitschlitz einer Runde von zeitlich aufeinanderfolgenden Zeitschlitzen plant, wobei in einer Runde für jede Teilnehmerstation des Busses zum Senden ihres Sendesignals mindestens ein Zeitschlitz vorgesehen ist und sich die Runde zyklisch wiederholt, und wobei die Zeitplanungseinheit mit den anderen Teilnehmerstationen des Busses im Betrieb des Bussystems unter Verwendung einer Priorität des Sendesignals festlegt, welchen Zeitschlitz der Runde die Sende-/Empfangseinrichtung zum Senden des Rahmens für das Sendesignal auf den Bus verwenden darf, wie in Anspruch 17 beschrieben.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus von Nachrichten, die von Teilnehmerstationen des Bussystems gemäß dem ersten Ausführungsbeispiel gesendet werden können;
Fig. 3 ein Zeitdiagramm zur Veranschaulichung des Ablaufs einer Kommunikation in dem Bussystem gemäß dem ersten Ausführungsbeispiel;
Fig. 4 ein Zeitdiagramm zur Veranschaulichung des Ablaufs einer Kommunikation in dem Bussystem gemäß dem ersten Ausführungsbeispiel, nachdem eine Teilnehmerstation wieder aufgeweckt wurde;
Fig. 5 ein Zeitdiagramm zur Veranschaulichung des Ablaufs einer Kommunikation in einem Bussystem gemäß einem zweiten Ausführungsbeispiel;
Fig. 6 ein Zeitdiagramm zur Veranschaulichung des Ablaufs einer Kommunikation in einem Bussystem gemäß einem dritten Ausführungsbeispiel;
Fig. 7 ein Zeitdiagramm zur Veranschaulichung des Ablaufs einer Kommunikation in einem Bussystem gemäß einem vierten Ausführungsbeispiel; und
Fig. 8 einen zeitlichen Verlauf eines differentiellen Bussignals in ungenutzten Zeitschlitzen bei einem Bussystem gemäß einem fünften Ausführungsbeispiel.

In den Figuren sind gleiche oder funktionsgleiche Elemente, sofern nichts Anderes angegeben ist, mit denselben Bezugszeichen versehen.

### Beschreibung der Ausführungsbeispiele

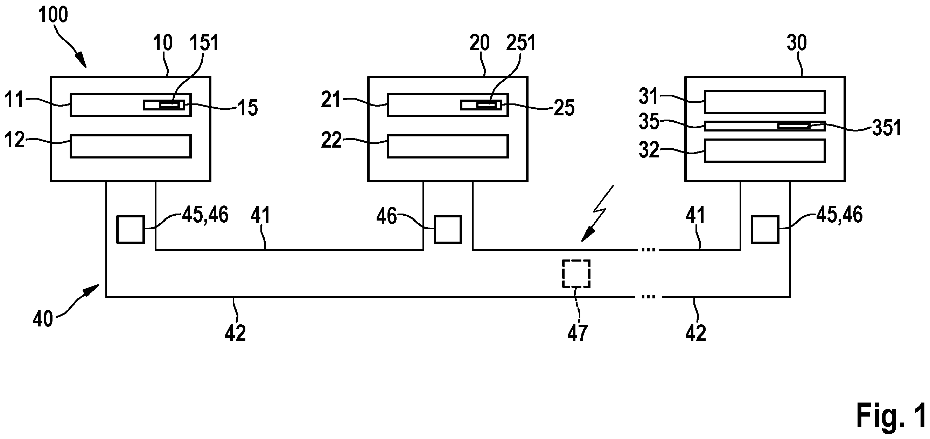

Fig. 1 zeigt als Beispiel ein Bussystem 100, das insbesondere grundlegend als ein CAN-Bussystem und/oder ein CAN FD-Bussystem und/oder ein CAN FD-Nachfolge-Bussystem, das hier als CAN XL-Bussystem bezeichnet ist, und/oder Abwandlungen davon ausgestaltet ist, wie nachfolgend beschrieben. Das Bussystem 100 kann in einem Fahrzeug, insbesondere einem Kraftfahrzeug, einem Flugzeug, usw., oder im Krankenhaus usw. Verwendung finden.

In Fig. 1 hat das Bussystem 100 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L oder CAN-XL_H und CAN-XL_L genannt werden und dienen zur elektrischen Signalübertragung nach Einkopplung der dominanten Pegel bzw. Erzeugung von rezessiven Pegeln für ein Signal im Sendezustand. Über den Bus 40 sind Nachrichten 45, 46 in der Form von Signalen zwischen den einzelnen Teilnehmerstationen 10, 20, 30 seriell übertragbar. Tritt bei der Kommunikation auf dem Bus 40 ein Fehler auf, wie durch den gezackten schwarzen Blockpfeil in Fig. 1 dargestellt, kann optional ein Fehlerrahmen 47 (Error Flag) gesendet werden. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11, eine Sende-/Empfangseinrichtung 12 und eine Zeitplanungseinheit 15 mit einem Zählmodul 151. Die Teilnehmerstation 20 hat eine Kommunikationssteuereinrichtung 21 eine Sende-/Empfangseinrichtung 22 und eine Zeitplanungseinheit 25 mit einem Zählmodul 251. Die Teilnehmerstation 30 hat eine Kommunikationssteuereinrichtung 31, eine Sende-/Empfangseinrichtung 32 und eine Zeitplanungseinheit 35 mit einem Zählmodul 351. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

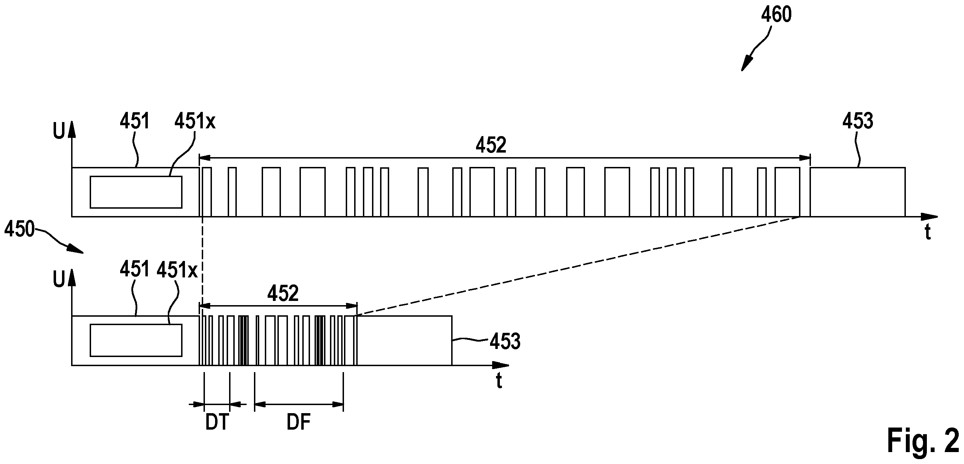

Die Kommunikationssteuereinrichtungen 11, 31 erstellen und lesen erste Nachrichten 45, die beispielsweise CAN Nachrichten sind die auf der Grundlage eines CAN XL-Formats aufgebaut sind, das in Bezug auf Fig. 2 detaillierter beschrieben ist. Die Kommunikationssteuereinrichtungen 11, 31 können zudem ausgeführt sein, um je nach Bedarf eine CAN XL-Nachricht 45 oder eine CAN FD-Nachricht 46 für die Sende-/Empfangseinrichtungen 12, 32 bereitzustellen oder von dieser zu empfangen. Die Kommunikationssteuereinrichtungen 11, 31 erstellen und lesen also eine erste Nachricht 45 oder zweite Nachricht 46, wobei sich die erste und zweite Nachricht 45, 46 durch ihren Datenübertragungsstandard unterscheiden, nämlich in diesem Fall CAN XL oder CAN FD.

Die Kommunikationssteuereinrichtung 21 kann wie ein herkömmlicher CAN-Controller nach ISO 11898-1:2015 ausgeführt sein, insbesondere wie ein CAN FD toleranter Classical CAN-Controller oder ein CAN FD-Controller. Die Kommunikationssteuereinrichtung 21 erstellt und liest zweite Nachrichten 46, beispielsweise Classical CAN Nachrichten oder CAN FD-Nachrichten 46. Bei den CAN FD-Nachrichten 46 kann eine Anzahl von 0 bis zu 64 Datenbytes umfasst sein, die noch dazu mit einer deutlich schnelleren Datenrate als bei einer Classical CAN-Nachricht übertragen werden. Insbesondere ist die Kommunikationssteuereinrichtung 21 bis auf die Einheit 25 wie ein herkömmlicher CAN oder CAN FD-Controller ausgeführt.

Die Sende-/Empfangseinrichtung 22 kann wie ein herkömmlicher CAN Transceiver nach ISO 11898-2:2016 oder CAN FD Transceiver ausgeführt sein. Die Sende-/Empfangseinrichtungen 12, 32 können ausgeführt sein, um je nach Bedarf Nachrichten 45 bzw. Bits eines Rahmens gemäß dem CAN XL-Format oder Nachrichten 46 bzw. Bits eines Rahmens gemäß dem derzeitigen CAN FD-Format für die zugehörige Kommunikationssteuereinrichtung 11, 31 bereitzustellen oder von dieser zu empfangen.

Mit den beiden Teilnehmerstationen 10, 30 ist eine Bildung und dann Übertragung von Nachrichten 45 mit dem CAN XL Format sowie der Empfang solcher Nachrichten 45 realisierbar.

Fig. 2 zeigt in ihrem oberen Teil für die Nachricht 46 einen CAN FD-Rahmen 460, wie er von der Sende-/Empfangseinrichtung 12 oder der Sende-/Empfangseinrichtung 22 oder der Sende-/Empfangseinrichtung 32 über der Zeit t seriell auf den Bus 40 gesendet wird. In dem unteren Teil von Fig. 2 ist für die Nachricht 45 ein spezielles Beispiel eines CAN-XL-Rahmens 450 gezeigt, wie er von der Sende-/Empfangseinrichtung 22 oder 32 über der Zeit t seriell auf den Bus 40 gesendet werden kann. Alternativ kann der obere Teil von Fig. 2 als Classical CAN-Rahmen und der untere Teil von Fig. 2 als CAN FD-Rahmen oder CAN XL-Rahmen interpretiert werden.

Gemäß Fig. 2 sind die Rahmen 450, 460 für die CAN-Kommunikation auf dem Bus 40 in unterschiedliche Kommunikationsphasen 451, 452, 453 unterteilt, nämlich eine Arbitrationsphase 451, eine Datenphase 452, und eine Rahmenendphase 453. In der Arbitrationsphase 451 am Anfang des Rahmens 450, 460 überträgt die zugehörige Sende-/Empfangseinrichtung 12, 22, 32 einen Identifizierer 451x und einen Teil eines Steuerfelds. In der Datenphase 452 werden unter anderem folgende Daten gesendet: ein Teil des Steuerfelds, die Nutzdaten des CAN-XL-Rahmens bzw. der Nachricht 45, 46 in einem Datenfeld DF und eine Checksumme. Bei einem Rahmen 450 kann ein Teil des Steuerfelds ein optionales Datentypfeld (DataType Feld) DT sein, das den Typ der Daten angibt, die in dem Datenfeld DF gesendet werden. Das Datentypfeld DT ist in Fig. 2 zur Veranschaulichung mit einer größeren Länge gezeigt, als es in Relation zu der Länge des Datenfelds DF oft ist. Das Datentypfeld DT kann in dem Steuerteil des Rahmens 450, 460, insbesondere am Anfang der Datenphase 452, oder am Ende der Arbitrationsphase 451 übertragen werden. Nach der Datenphase 452, folgt die Rahmenendphase 453, die entsprechend IS011898-1:2015 auch zur Arbitrationsphase gehört. Die Rahmenendphase 453, die auch als Arbitrationsphase am Ende des Rahmens 450, 460 bezeichnet werden kann, weist unter anderem folgende Teile auf: ein ACK-Feld und eine Rahmenendekennzeichnung (EOF, End of Frame). Die Rahmenendphase 453 ist hier nicht weiter relevant und daher nicht genauer beschrieben.

In der Arbitrationsphase 451 überträgt die zugehörige Sende-/Empfangseinrichtung 12, 22, 32 Bits des Rahmens 450, 460 mit einer langsameren Bitrate als in der Datenphase 452. Bei CAN FD ist die Datenphase 452 gegenüber der Datenphase 452 des Classical CAN-Rahmens zeitlich deutlich verkürzt. In besonderen Anwendungsfällen können die beiden Bitraten der Phasen 451, 452 auf gleiche Werte konfiguriert werden, aber üblicherweise ist die Bitrate in der Datenphase 452 wesentlich höher als in der Arbitrationsphase 451.

Für CAN XL wird ein Rahmenformat definiert, in dem nicht nur die Bitraten innerhalb des Rahmens 450 bzw. der Nachricht 45 umgeschaltet werden, sondern optional auch der Betriebsmodus der Sende-/Empfangseinrichtung 12, 32. In der Arbitrationsphase 451 arbeitet die Sende-/Empfangseinrichtung 12, 32 in einem Betriebsmodus (hier genannt CAN), der kompatibel ist zu ISO 11898-2:2016. In der Datenphase 452 des Rahmens 450 kann die Sende-/Empfangseinrichtung 12, 32 optional in einen anderen Betriebsmodus geschaltet werden, der höhere Bitraten und damit eine schnelle Datenübertragung möglich macht.

Die Arbitrationsphase 451 wird genutzt, um mit Hilfe eines Identifizierers (ID) 451x bitweise zwischen den Teilnehmerstationen 10, 20, 30 auszuhandeln, welche Teilnehmerstation 10, 20, 30 die Nachricht 45, 46 mit der höchsten Priorität hat und daher für die nächste Zeit zum Senden zumindest in der anschließenden Datenphase 452 einen exklusiven Zugriff auf den Bus 40 des Bussystems 100 bekommt. Hierbei wird in der Arbitrationsphase 451 das bekannte CSMA/CR-Verfahren angewandt, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 100 relativ einfach weitere Bus-Teilnehmerstationen 10, 20, 30 hinzugefügt werden, was sehr vorteilhaft ist.

Somit wird in der Arbitrationsphase 451 von der zugehörigen Sende-/Empfangseinrichtung 12, 22, 32 ein Physical Layer wie bei CAN und CAN-FD verwendet. Der Physical Layer entspricht der Bitübertragungsschicht oder Schicht 1 des bekannten OSI-Modells (Open Systems Interconnection Modell).

Sind die Zeitplanungseinheiten 15, 25, 35 nicht aktiviert, werden die Rahmen 450, 460 erstellt und der Buszugriff der einzelnen Teilnehmerstationen erfolgt unkoordiniert. Konflikte werden bei der Kommunikation auf dem Bus 40 mit einer Arbitration aufgelöst, wie in der ISO 11898-1:2015 festgelegt.

Das CSMA/CR-Verfahren hat zur Folge, dass es sogenannte rezessive Zustände auf dem Bus 40 geben muss, welche von anderen Teilnehmerstationen 10, 20, 30 mit dominanten Zuständen auf dem Bus 40 überschrieben werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit etwa 2 Megabit pro Sekunde im realen Fahrzeug-Einsatz.

Ein Sender der Nachricht 45, 46 beginnt ein Senden von Bits der Datenphase 452 auf den Bus 40 erst, wenn die entsprechende Teilnehmerstation 10, 20, 30 als der Sender die Arbitration gewonnen hat und die Teilnehmerstation 10, 20, 30 als Sender damit zum Senden einen exklusiven Zugriff auf den Bus 40 des Bussystems 100 hat.

Ganz allgemein können in dem Bussystem mit CAN XL im Vergleich zu CAN oder CAN FD folgende abweichenden Eigenschaften realisiert werden:
a) Übernahme und gegebenenfalls Anpassung bewährter Eigenschaften, die für die Robustheit und Anwenderfreundlichkeit von CAN und CAN FD verantwortlich sind, insbesondere Rahmenstruktur mit Identifizierer 451x und Arbitrierung nach dem CSMA/CR-Verfahren,
b) Steigerung der Netto-Datenübertragungsrate, insbesondere auf etwa 10 Megabit pro Sekunde,
c) Anheben der Größe der Nutzdaten pro Rahmen, insbesondere auf etwa 4kbyte.

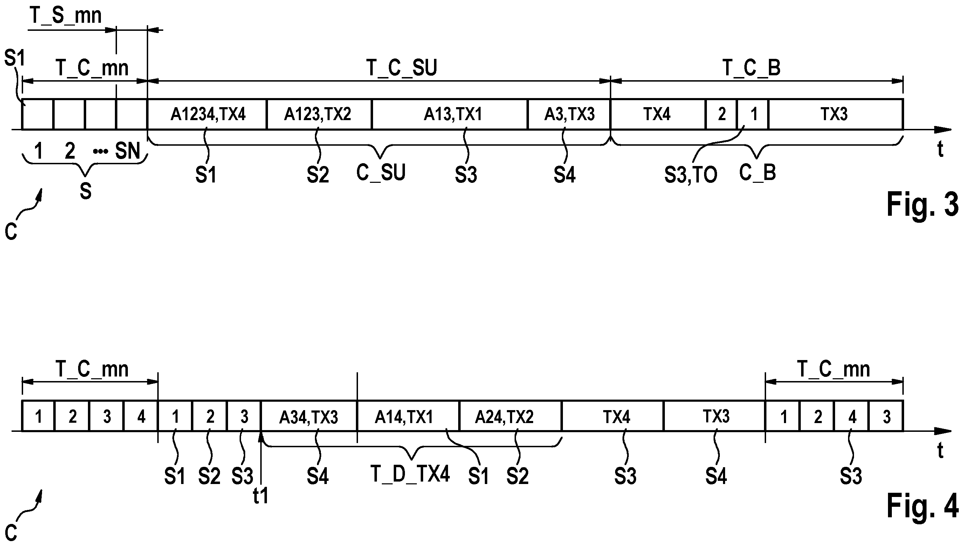

Fig. 3 zeigt einen Fall für eine Kommunikation auf dem Bus 40, bei welcher die Zeitplanungseinheiten 15, 25, 35 aktiviert sind. In diesem Fall ist ein deterministischer Buszugriff jeder der Teilnehmerstationen 10, 20, 30 möglich. Hierfür wird bei der Kommunikation auf dem Bus 40 eine Senderunde bzw. Runde C (Cycle) verwendet, in welcher im einfachsten Fall für jede der Teilnehmerstationen 10, 20, 30 ein Zeitschlitz S vorhanden ist. Die Anzahl SN der Zeitschlitze S entspricht also der Anzahl N der Teilnehmerstationen 10, 20, 30 am Bus 40. Die Bandbreite auf dem Bus 40 wird durch die Anzahl N der Teilnehmerstationen 10, 20, 30 geteilt.

Bei dem Beispiel von Fig. 3 gibt es vier Zeitschlitze S, nämlich die Zeitschlitze S1, S2, S3, S4, so dass vier beliebige Teilnehmerstationen der Teilnehmerstationen 10, 20, 30 vorhanden sind. Daher werden die vier beliebigen Teilnehmerstationen der Teilnehmerstationen 10, 20, 30 nachfolgend als Teilnehmerstationen 1, 2, 3, 4 bezeichnet.

Ganz allgemein können SN Zeitschlitze S vorgesehen sein, wobei SN eine beliebige natürliche Zahl ist. Die Zahl der Zeitschlitze S ist konstant, also in jeder Runde C gleich.

Die Zeitplanungseinheiten 15, 25, 35 bewirken eine Erstellung der Rahmen 450, 460 gemäß den folgenden Regeln.

Jeder Rahmen 450, 460 beginnt wieder mit einer Arbitrationsphase 451. Der Identifizierer 451x kann für jeden Rahmen 450, 460 beliebig gewählt werden, so lange die bei CAN übliche Regel eingehalten wird, dass jeder Identifizierer 451x nur exklusiv von eine der Teilnehmerstationen 1, 2, 3, 4 verwendet wird.

Die minimale Zeitschlitzdauer T_S_mn ist mindestens eine Arbitrations-Bitzeit, also so lang wie die Bitzeit eines Bits in der Arbitrationsphase 451. Die maximale Zeitschlitzdauer T_S_mx ist gleich der maximalen Länge eines Rahmens 460 oder 450. Somit ist die minimale Rundendauer T_C_mn gleich der Summe aller minimalen Zeitschlitzdauern T_S_mn. Außerdem ist die maximale Rundendauer T_C_mx gleich der Summe aller maximalen Zeitschlitzdauern T_S_mx.

Jede Teilnehmerstation 1, 2, 3, 4 darf auf den Bus 40 nur in dem Zeitschlitz S1, S2, S3, S4 senden, der für die Teilnehmerstationen 1, 2, 3, 4 vorgesehen ist. Bei dem vorliegenden Ausführungsbeispiel darf jede Teilnehmerstation 1, 2, 3, 4 in dem für sie vorgesehenen Zeitschlitz S1, S2, S3, S4 einen einzigen Rahmen 450, 460 auf den Bus 40 senden.

Jede der Teilnehmerstationen 1, 2, 3, 4 hat in ihrem Zeitschlitz S1, S2, S3, S4 jeweils eine Sendegelegenheit TO (Transmit Opportunity). Somit kann die Teilnehmerstation 1, 2, 3, 4 in dem ihr zugeordneten Zeitschlitz S1, S2, S3, S4 einen Rahmen 450, 460 senden oder kann die Gelegenheit zum Senden verstreichen lassen. Nach einer minimalen Zeitschlitzdauer T_S_mn ist die Sendegelegenheit TO verstrichen.

Bei dem Beispiel von Fig. 3 ist die minimale Runden-Dauer T_C_mn vier Arbitrations-Bitzeiten, weil 4 Zeitschlitze S1, S2, S3, S4 für die vier Teilnehmerstationen 1, 2, 3, 4 bereitstehen. Die minimale Zeitschlitzdauer T_S_mn ist als 1Arbitrations-Bitzeit angenommen.

Bei dem vorliegenden Ausführungsbeispiel gelten folgende Grundannahmen. In der ersten Runde C, also nach dem Einschalten des Bussystems 100, werden die Zeitschlitze S1, S2, S3, S4 den einzelnen Teilnehmerstationen 1, 2, 3, 4 zugeordnet. Die Zuordnung erfolgt dynamisch über die Rahmen-IDs bzw. Identifizierer 451x, welche die Teilnehmerstationen 1, 2, 3, 4 zum Senden ihres ersten Rahmens 450, 460 verwenden. Mittels der Arbitration wird die Sendereihenfolge festgelegt, was der Zuordnung der Zeitschlitze S1, S2, S3, S4 zu den Teilnehmerstationen 1, 2, 3, 4 entspricht.

Falls die Teilnehmerstationen 1, 2, 3, 4 nicht gleichzeitig eingeschaltet werden, ist die Zuordnung der Zeitschlitze S1, S2, S3, S4 erst dann abgeschlossen, wenn die letzte Teilnehmerstation 1, 2, 3, 4 eingeschaltet ist und wenn jede Teilnehmerstationen 1, 2, 3, 4 einen Rahmen 450, 460 gesendet hat. In den nachfolgenden Runden C bleibt die Zuordnung der Zeitschlitze S1, S2, S3, S4 zu den Teilnehmerstationen 1, 2, 3, 4 erhalten. Das heißt, es erfolgt keine erneute Arbitration und die Sendereihenfolge ist unverändert. Wenn eine oder mehrere der Teilnehmerstationen 1, 2, 3, 4 schlafen gehen und wieder aufwachen, erfolgt eine Re-Integration, die wieder eine Arbitration erfordert. Dies ist später anhand von Fig. 4 genauer beschrieben.

Fig. 3 zeigt eine Startrunde C_SU, bei welcher in einer Zeitdauer T_C_SU die Zuordnung der Zeitschlitze S1, S2, S3, S4 zu den Teilnehmerstationen 1, 2, 3, 4 festgelegt wird. Der Einfachheit halber ist bei dem Beispiel von Fig. 3 angenommen, das alle Teilnehmerstationen 1, 2, 3, 4 gleich zu Beginn einen Rahmen 450, 460 senden möchten.

In dem Zeitschlitz S1 starten alle Teilnehmerstationen 1, 2, 3, 4 gleichzeitig einen Rahmen und nehmen an der Bus-Arbitration teil, wie durch A1234 in Fig. 3 dargestellt. Die Teilnehmerstation 4 gewinnt die Arbitration A und sendet ihren Rahmen. Dies ist mit TX4 in Fig. 3 dargestellt, wobei TX4 für das Sendesignal TX der Teilnehmerstation 4 steht und der Rahmen auf dem Sendesignal TX4 basiert. Dadurch ist der Zeitschlitz S1 der Teilnehmerstation 4 zugeordnet.

In dem Zeitschlitz S2 starten die Teilnehmerstationen 1, 2, 3 gleichzeitig einen Rahmen und nehmen an der Bus-Arbitration teil, wie durch A123 in Fig. 3 dargestellt. Die Teilnehmerstation 2 gewinnt die Arbitration und sendet ihren Rahmen. Dies ist mit TX2 in Fig. 3 dargestellt. Dadurch ist der Zeitschlitz S2 der Teilnehmerstation 2 zugeordnet.

Für Zeitschlitz S3 wird eine Arbitration zwischen den Teilnehmerstationen 1, 3 durchgeführt, wie zuvor beschrieben. Letztlich wird bei dem Beispiel von Fig. 3 der Zeitschlitz S3 der Teilnehmerstation 1 zugeordnet.

Der Zeitschlitz S4 wird der Teilnehmerstation 3 zugeordnet. Eine Arbitration erfolgt nicht mehr, weil die anderen Teilnehmerstationen 1, 2, 4 in dem Zeitschlitz S4 nichts senden.

Daher ist die TX-Sendereihenfolge durch die Arbitration im Folgenden als TX_4_2_1_3 festgelegt.

Danach kann ein Normalbetrieb des Bussystems 100 beginnen. Eine mögliche Runde C im Betrieb könnte eine Runde C_B sein, die in Fig. 3 im rechten Teil der Abbildung dargestellt ist. In der Runde C_B bleibt die TX-Sendereihenfolge unverändert als TX_4_2_1_3 festgelegt. In der Runde C_B senden die Teilnehmerstationen 3, 4. Dagegen senden die Teilnehmerstationen 1, 2 nicht. Daher nutzen die Teilnehmerstationen 3, 4 ihre Sendegelegenheit TO. Die Teilnehmerstationen 1, 2 lassen ihre Sendegelegenheit TO jedoch verstreichen. Somit ergibt sich eine mittlere Runden-Dauer T_C_B. Die maximale Rundendauer T_C_mx ergibt sich dann, wenn in jedem Zeitschlitz S1 bis S4 von der zugehörigen Teilnehmerstation 1, 2, 3, 4 ein Rahmen 450, 460 mit maximaler Länge gesendet wird. Die Zahl 1 in Zeitschlitz S3 drückt aus, dass dieser Zeitschlitz der Teilnehmerstation 1 zugeordnet ist. Die Zahl 2 in Zeitschlitz S2 drückt aus, dass dieser Zeitschlitz der Teilnehmerstation 2 zugeordnet ist. Analog gilt dies für die Zeitschlitze S1 und S4 und die Teilnehmerstationen 3, 4.

Zur Umsetzung der zuvor beschriebenen Zeitplanung für ein Senden von Rahmen 450, 460 auf den Bus 40 ist jede der Zeitplanungseinheiten 15, 25, 35 aufgebaut, wie nachfolgend beschrieben.

Jede Teilnehmerstation 1, 2, 3, 4 am Bus 40 kennt die Anzahl SN der Zeitschlitze S1, S2, S3, S4 pro Runde C. Im einfachsten Fall entspricht die Anzahl der Teilnehmerstationen 1, 2, 3, 4 am Bus 40 der Zahl der Zeitschlitze S1, S2, S3, S4 pro Runde C, so dass sich eine 1:1 Zuordnung von Zeitschlitzen und Teilnehmerstationen ergibt. Die Anzahl SN der Zeitschlitze S1, S2, S3, S4 pro Runde C ist in den Zeitplanungseinheiten 15, 25, 35 hinterlegt.

Der normale Betrieb beginnt für eine Teilnehmerstation 1, 2, 3, 4, sobald die Teilnehmerstation 1, 2, 3, 4 ihren ersten Rahmen 450, 460 gesendet hat. Nach dem gesendeten Rahmen 450, 460 setzt das Zählmodul 151, 251, 351 der Zeitplanungseinheiten 15, 25, 35 seinen Zählwert Scnt auf 1. Ab jetzt zählt das Zählmodul 151, 251, 351 mit mindestens einem Zähler die Zahl der empfangenen Rahmen 450, 460 auf dem Bus 40 und die Zahl der verstrichenen Sendegelegenheiten TO. Hierbei zählt das Zählmodul 151, 251, 351 pro empfangenen Rahmen 450, 460 und verstrichener Sendegelegenheit TO, so dass der Zählwert Scnt des mindestens einen Zählers jeweils um 1 inkrementiert wird und damit gilt Scnt := Scnt + 1.

Sobald das Rahmenstartbit (Start-of-Frame-Bit) eines Rahmens 450, 460 auf dem Bus 40 gesendet wird, wertet das Zählmodul 151, 251, 351 den Rahmen 450, 460 als gesendeten Rahmen 450, 460 auf dem Bus 40. Dies gilt auch, wenn die Übertragung vom Sender abgebrochen wird, beispielsweise durch einen Fehlerrahmen 47 wegen eines Fehlers.

Gilt in dem Zählmodul 151, 251, 351 für den Zählwert Scnt == SN, ist der nächste Zeitschlitz der eigene Zeitschlitz. Somit hat die Teilnehmerstation 1, 2, 3, 4 bei dem Zählwert Scnt == SN in dem nächsten Zeitschlitz die eigene Sendegelegenheit TO. Jetzt kann die betroffene Teilnehmerstation 1, 2, 3, 4 einen Rahmen 450, 460 senden oder die Sendegelegenheit TO verstreichen lassen.

Auch wenn die Teilnehmerstation 1, 2, 3, 4 ihre Sendegelegenheit TO verstreichen lässt, dann setzt das zugehörige Zählmodul 151, 251, 351 der Teilnehmerstation 1, 2, 3, 4 trotzdem ihren Zählwert Scnt:=1.

Außerdem setzt das Zählmodul 151, 251, 351 einer Teilnehmerstation 1, 2, 3, 4 seinen Zählwert erst dann auf Scnt:=1, wenn die Teilnehmerstation 1, 2, 3, 4 ihren Rahmen senden konnte oder ihre Sendegelegenheit TO hat verstreichen lassen. Dies ist dann notwendig, wenn die Sendereihenfolge am Bus 40 neu vergeben wird und es dadurch wieder zu einer Arbitration kommt. Dies kann der Fall sein, wenn eine der Teilnehmerstationen 1, 2, 3, 4 wieder aufgeweckt wurde und diese dann wieder an der Buskommunikation teilnehmen will. Dies ist anhand von Fig. 4 nachfolgend genauer beschrieben.

Nach dem Einschalten oder dem Aufwachen ist es den Teilnehmerstationen 1, 2, 3, 4 unbekannt, welcher der Zeitschlitze S1, S2, S3, S4 pro Runde C der jeweiligen Teilnehmerstation 1, 2, 3, 4 zugeordnet ist.

Fig. 4 zeigt den Fall, dass die Teilnehmerstation 3 zunächst schlief und dann wieder aufgeweckt wurde. Beispielsweise ist die Teilnehmerstation 3 zu dem Zeitpunkt t1 in Fig. 4 wieder aufgewacht und bereit zum Senden. Bis zu diesem Zeitpunkt und somit auch bis zu dem Zeitpunkt, bevor die Teilnehmerstation 3 schlafen gelegt wurde, war die Sendereihenfolge als TX_1_2_3_4 festgelegt, wie auf der linken Seite in Fig. 4 mit den Zahlen in den Zeitschlitzen gezeigt. Da die Teilnehmerstation 3 ihre Synchronisation zu der Zeitschlitznummer verloren hat, versucht die Teilnehmerstation 3 bei nächster Gelegenheit, also wenn der Bus 40 frei ist, beispielsweise einen Rahmen 450 zu senden. Das Senden des ersten Rahmens 450 versucht die Teilnehmerstation 3 bei dem Beispiel von Fig. 4 zufällig genau zu dem Zeitpunkt t1, als ihre eigentliche Sendegelegenheit TO in Zeitschlitz S3 abgelaufen ist.

Der Rahmen 450 der Teilnehmerstation 3 führt zu einer Arbitration am Bus 40, falls der aktuelle Zeitschlitz, in dem gezeigten Beispiel der Zeitschlitz S4, schon einer anderen der Teilnehmerstationen 1, 2, 4 zugeordnet ist und diese Teilnehmerstation 1, 2, 4 im aktuellen Zeitschlitz auch einen Rahmen 450, 460 startet. Bei dem Beispiel von Fig. 4 findet daher eine Arbitration zwischen den Rahmen 450, 460 der Teilnehmerstationen 3, 4 statt, wie mit A34 in Fig. 4 dargestellt. Die neu eingeschaltete Teilnehmerstation 3 versucht also, sich buchstäblich in die Kommunikation reinzuquetschen.

Verliert der Rahmen 450 der Teilnehmerstation 3 die Arbitration, wiederholt die Teilnehmerstation 3 das Senden des Rahmens 450 so oft, bis die Teilnehmerstation 3 die Arbitration gewonnen hat und ihren Rahmen 450 senden kann oder, nach dem Gewinn der Arbitration, aufgrund eines Fehlers abbricht. Anschließend setzt das Zählmodul 151, 251, 351 der Teilnehmerstation 3 seinen Zählwert Scnt:=1 und beginnt somit wieder am Anfang der Zählung.

Bei dem Beispiel von Fig. 4 hat der Rahmen 450 der Teilnehmerstation 3 die Arbitration in dem Zeitschlitz S4 gewonnen. Damit hat die Teilnehmerstation 3 den Zeitschlitz S4 von der Teilnehmerstation 4 übernommen. Mit anderen Worten, die Teilnehmerstation 4 wollte einen der Rahmen 450, 460 senden, hat aber die Arbitration auf dem Bus 40 verloren. Somit wird der Teilnehmerstation 4 ihr Zeitschlitz S4 soeben von einer anderen der Teilnehmerstationen weggenommen. Bei dem Beispiel von Fig. 4 ist dies die Teilnehmerstation 3, die neu gestartet wurde und Teilnehmerstation 4 den Zeitschlitz weggenommen hat.

Daher muss nun der Rahmen der Teilnehmerstation 4 mit dem Rahmen der Teilnehmerstation 1 in dem darauffolgenden Zeitschlitz S1 arbitrieren. Da hier der Rahmen der Teilnehmerstation 1 die Arbitration gewinnt, muss der Rahmen der Teilnehmerstation 4 im Zeitschlitz S2 mit dem Rahmen der Teilnehmerstation 2 arbitrieren. Letztlich kann die Teilnehmerstation 4 ihr Sendesignal TX4 bzw. den zugehörigen Rahmen 450, 460 erst in dem Zeitschlitz S3 senden, der zuvor der Teilnehmerstation 3 zugeordnet war. Somit wird das Senden des Sendesignals TX4 um die Zeitdauer T_D_TX4 verzögert.

Demzufolge wird bei dem Beispiel von Fig. 4, bzw. je nach Ergebnis der Arbitration, die Zuordnung der Zeitschlitze S1, S2, S3, S4 neu verteilt. Bei dem Beispiel von Fig. 4 ist also die bisherige Sendereihenfolge nicht mehr als TX_1_2 3_4 festgelegt, sondern wird auf TX_1_2_4_3 geändert. Bei diesem Beispiel haben also Teilnehmerstationen 3, 4 ihre zugeordneten Zeitschlitze S3, S4 getauscht, wie rechts in Fig. 4 mit den Zahlen in den Zeitschlitzen gezeigt.

Diese neue Sende- bzw. Zeitschlitzzuordnung führt dazu, dass die zeitliche Verzögerung im ungünstigsten Fall (Worst-Case Delay) für den Buszugriff von Teilnehmerstation 4 länger wird als die maximale Runden-Dauer T_C_mx. Im ungünstigsten Fall ist die Verzögerung um SN-1 maximale Rahmenlängen länger als die maximale Runden-Dauer T_C_mx, d.h. hier um SN - 1 = 4 - 1 = 3 länger. Die zeitliche Verzögerung im ungünstigsten Fall (Worst-Case Delay) für den Buszugriff einer Teilnehmerstation 1, 2, 3, 4 ist somit S + S - 1 = 2S - 1 maximale Rahmenlängen. Dies ist vergleichbar mit dem PLCA von 10BASE-T1S, der ungefähr den gleichen Wert hat.

Ein Vorteil dieses Ausführungsbeispiels ist, dass die Kommunikation am Bus 40 durch die Arbitration selbstorganisierend ist. Daher ist kein Masterknoten notwendig, um die Kommunikation zu organisieren. Durch den nicht vorhandenen Masterknoten gibt es auch keinen "Single Point of Failure" welcher die Kommunikation am Bus 40 zum Erliegen bringen kann.

Ein weiterer Vorteil dieses Ausführungsbeispiels liegt darin, dass bei der Konfiguration des Bussystems 100 nur ein einziger Parameter einzugeben ist, nämlich der Parameter SN, der gleich der Zahl N der Teilnehmerstationen am Bus 40 ist. Dadurch ist der Aufwand für die Konfiguration sehr gering.

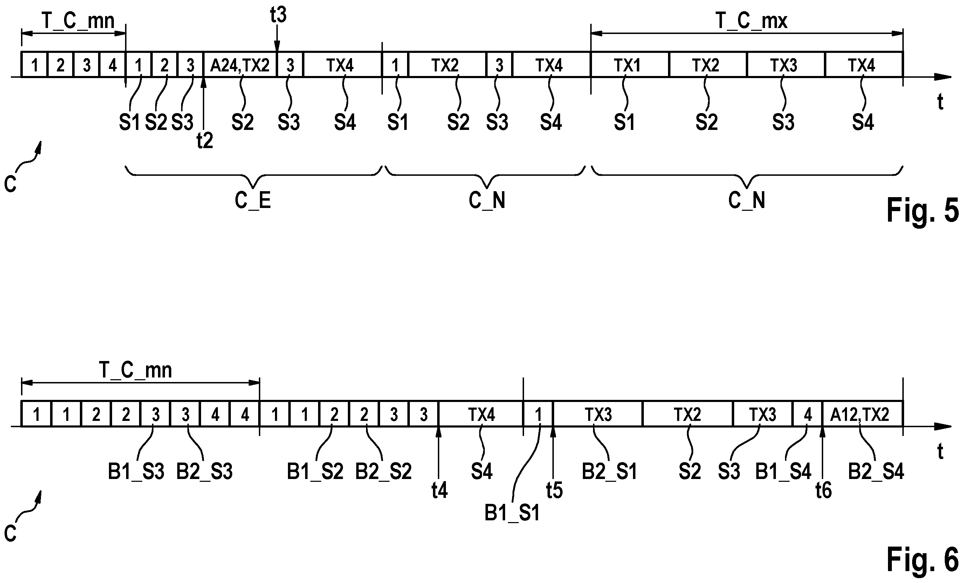

Fig. 5 zeigt einen Zeitablauf bei dem Bussystem 100 zur Veranschaulichung einer Kommunikation gemäß einem zweiten Ausführungsbeispiel. Hierfür zeigt Fig. 5 eine Runde bei dem Einschalten einer Teilnehmerstation 1, 2, 3, 4, also eine Einschaltrunde C_E, und einen anschließenden Normalbetrieb mit Normalen Runden C_N.

Im Unterschied zu dem Zeitablauf der Kommunikation gemäß dem vorangehenden Ausführungsbeispiel ist es bei dem vorliegenden Ausführungsbeispiel auch möglich, dass eine Teilnehmerstation 1, 2, 3, 4 nach dem Einschalten oder Aufwachen schneller wieder auf die Zeitschlitz-Nummer synchronisiert ist als bei dem vorangehenden Ausführungsbeispiel. Dies wird mit Hilfe einer Teilnehmerstation-Nummer erreicht, die als Information im Rahmen 450, 460 übertragen wird. Dadurch ist am Bus 40 bzw. durch Auswertung des vom Bus 40 empfangenen Rahmens sichtbar, welche Teilnehmerstation 1, 2, 3, 4 des Busses 40 derzeit sendet. Damit ist indirekt bekannt, welche Nummer der aktuelle Zeitschlitz hat. Hierfür wird bei dem vorliegenden Ausführungsbeispiel folgendermaßen vorgegangen.

Jede Teilnehmerstation 1, 2, 3, 4 am Bus 40, genauer gesagt jede Zeitplanungseinheit 151, 251, 351, kennt die Anzahl SN der Zeitschlitze S1, S2, S3, S4 pro Runde C. Die Anzahl SN kann bei der Konfiguration des Bussystems 100 bei der jeweiligen Zeitplanungseinheit 151, 251, 351 als Parameter SN eingegeben werden. Im einfachsten Fall entspricht die Zahl N der Teilnehmerstation 1, 2, 3, 4 am Bus 40 der Anzahl SN der Zeitschlitze S1, S2, S3, S4 pro Runde C, so dass wieder die 1:1 Zuordnung gegeben ist.

Zudem kennt jede Teilnehmerstation 1, 2, 3, 4 die Teilnehmerstation-Nummern der anderen Teilnehmerstationen 1, 2, 3, 4. Im einfachsten Fall wird die Teilnehmerstation-Nummer als Rahmen-Identifizierer 451x (Rahmen-ID) verwendet, der am Anfang jedes Rahmens 450, 460 gesendet wird. Jede Teilnehmerstation 1, 2, 3, 4 weiß somit, welcher Zeitschlitz S1 bis S4 welcher Teilnehmerstation 1, 2, 3, 4 gehört. Noch dazu sendet jede Teilnehmerstation 1, 2, 3, 4 alle ihre Rahmen 450, 460 idealerweise mit demselben Rahmen-Identifizierer 451x.

Sind beispielsweise SN = 10 Zeitschlitze S1 bis S10 und somit auch Teilnehmerstation 1 bis 10 am Bus 40 vorhanden, kann der Rahmen-Identifizierer 451x und somit Teilnehmerstation-Nummer von Teilnehmerstation 1 die 0x01 sein, die von Teilnehmerstation 2 die 0x02, usw. und die von Teilnehmerstation 10 die 0x0A. In einer einfachen Zuordnung von Teilnehmerstation zu Zeitschlitzen sendet die Teilnehmerstation 1 in dem Zeitschlitz S1, die Teilnehmerstation 2 in dem Zeitschlitz S2, usw. und die Teilnehmerstation 10 in dem Zeitschlitz S10. Dadurch wird die Zuordnung der Teilnehmerstationen S1 bis S10 zu den Zeitschlitzen S1 bis S10 sehr unaufwändig. Jedoch könnte die Sendereihenfolge, welche der Zuordnung von Zeitschlitz-Nummer zu Teilnehmerstation-Nummer entspricht, selbstverständlich beliebig festgelegt werden.

Im Folgenden wird wieder von SN=4 Zeitschlitzen sowie N=4 Teilnehmerstationen ausgegangen.

Nach dem Einschalten muss jede Teilnehmerstation 1, 2, 3, 4 die Kommunikation auf dem Bus 40 für eine gewisse Zeit beobachten. Hierbei sind die folgenden zwei Fälle zu unterscheiden, die nachfolgend beschrieben sind.

In dem ersten Fall A1 empfängt beispielsweise die Teilnehmerstation 1 einen gültigen Rahmen 450, 460. Durch die Teilnehmerstation-Nummer im empfangenen Rahmen 450, 460, die beispielsweise über den Rahmen-Identifizierer 451x angegeben ist, kennt die Teilnehmerstation 1 die aktuelle Zeitschlitz-Nummer. Somit ist die Teilnehmerstation 1 synchronisiert auf die Zeitschlitze S1 bis S4 und geht in den normalen Betrieb über.

Der zweite Fall A2 ist, dass die Teilnehmerstation 1, 2, 3, 4 keinen Rahmen 450, 460 empfängt, weil der Bus gerade Idle ist, wie in Fig. 5 links von dem Zeitpunkt t2 an den vielen ungenutzten Sendegelegenheiten TO für die Zeitschlitze S1 bis S4 zu sehen ist.

Sind SN Zeitschlitze minimaler Dauer verstrichen, ohne dass beispielsweise die Teilnehmerstation 2 nach ihrem Einschalten einen Rahmen 450, 460 empfangen hat, dann hat in dieser Einschaltrunde C_E bisher keine der Teilnehmerstationen 1, 2, 3, 4 gesendet. Bei dem Beispiel von Fig. 5 hat die vorbestimmte Wartezeit für die neu eingeschaltete Teilnehmerstation 2 eine Zeitdauer T_C_mn. Die Zeitdauer T_C_mn entspricht SN = 4 Zeitschlitzen mit verstrichener Sendegelegenheit TO.

Daher kann die Teilnehmerstation 2 bei dem Zeitpunkt t2 einfach ihren Rahmen 450, 460 senden. Damit sendet die Teilnehmerstation 2 höchstwahrscheinlich in einem Zeitschlitz, der einer anderen der Teilnehmerstationen 1, 3, 4 zugeordnet ist. Das ist jedoch kein Problem. Auf Grund der langen vorangegangenen Idle Phase auf dem Bus 40, die vielen verstrichenen Sendegelegenheiten TOs entspricht, wird nämlich die zeitliche Verzögerung im ungünstigsten Fall (Worst-Case Delay) für den Buszugriff nicht größer. Starten in einem Zeitschlitz S1, S2, S3, S4 mehrere Teilnehmerstationen 1, 2, 3, 4 gleichzeitig eine Sendung und kommt es dadurch zu einer Arbitration auf dem Bus 40, dann definiert der Rahmen, der die Arbitration gewonnen hat, die Zeitschlitz-Nummer neu.

Gemäß dem Beispiel von Fig. 5 ist eine vorbestimmte Wartezeit, die einer minimalen Zyklusdauer T_C_mn entspricht, für die Teilnehmerstation 2 verstrichen. Somit darf die Teilnehmerstation 2 jetzt senden. Der Zeitschlitz, der in der Einschalt-Runde C_E an dem Zeitpunkt t2 beginnt, ist eigentlich der Teilnehmerstation 4 zugeordnet. Somit entsteht der Fall, dass die Teilnehmerstation 2 und die Teilnehmerstation 4 bei dem Beispiel von Fig. 5 im Zeitschlitz nach dem Zeitpunkt t2 beginnen, einen Rahmen zu senden. Dies ist in Fig. 5 als A24, TX2 dargestellt. Die Rahmen der Teilnehmerstationen 2, 4 nehmen somit an der Bus-Arbitration teil. Bei dem Beispiel von Fig. 5 setzt sich die Teilnehmerstation 2 durch, da die Teilnehmerstation 2 einen Identifizierer 451x mit höherer Priorität im Rahmen aufweist.

Durch den gesendeten Rahmen 450, 460 nach dem Zeitpunkt t2 ändert die jeweilige Zeitplanungseinheit 151, 251, 351 der Teilnehmerstationen 1, 2, 3, 4 die bisherige Zeitschlitz-Nummer S4 für alle Teilnehmerstationen 1, 2, 3, 4 auf die Nummer, die dem gesendeten Rahmen zusteht. Somit wird der Zeitschlitz nach dem Zeitschlitz S3 bzw. nach dem Zeitpunkt t2 neu als Zeitschlitz S2 nummeriert, wie in Fig. 5 angegeben.

Danach, also bei oder ab dem Zeitpunkt t3 kennen alle Teilnehmerstationen 1, 2, 3, 4 die aktuelle Zeitschlitz-Nummer, welche hier S3 ist.

Im normalen Betrieb, also während der Runden C_N, ist eine Teilnehmerstation 1, 2, 3, 4 auf die Zeitschlitz-Nummern synchronisiert. Um den eigenen Zeitschlitz S1, S2, S3, S4 zu finden, verwendet jede Teilnehmerstation 1, 2, 3, 4 ihr Zählmodul 151, 251, 351, wie in Bezug auf das vorangehende Ausführungsbeispiel beschrieben. Das Zählmodul 151, 251, 351 ist insbesondere deshalb notwendig, weil manche Teilnehmerstation 1, 2, 3, 4, wie beispielsweise die Teilnehmerstation 3 in ihrem Zeitschlitz S3, ihre Sendegelegenheit TO eventuell verstreichen lassen, beispielsweise, weil ein Sensor als Teilnehmerstation 3 derzeit keine Daten erfasst oder nicht so viele Daten senden muss. Dies ist in Fig. 5 in der Mitte gezeigt. Im rechten Teil von Fig. 5 ist dagegen eine normale Runde C_N maximaler Dauer T_C_mx gezeigt. Mit Hilfe des Zählmoduls 151, 251, 351 ist jeder Teilnehmerstation 1, 2, 3, 4 jetzt aber trotzdem bekannt, um welchen Zeitschlitz bzw. um welche Zeitschlitz-Nummer es sich handelt. Dadurch bleiben alle Teilnehmerstationen 1, 2, 3, 4 des Bussystems 100 auf die Zeitschlitze S1, S2, S3, S4 bzw. auf die Zeitschlitz-Nummern synchronisiert.

Der einmalige Empfang eines Rahmens 450, 460 reicht aus, damit die Zeitplanungseinheit 15, 25, 35 der jeweiligen Teilnehmerstationen 1, 2, 3, 4 immer bereit ist, einen für die Teilnehmerstation 1, 2, 3, 4 vorgesehenen Rahmen in einem Zeitschlitz S1, S2, S3, S4 zu senden. Nach SN Zeitschlitzen, also nach einer minimalen Zyklusdauer T_C_mn, ohne Rahmen 450, 460 ist die Zeitplanungseinheit 15, 25, 35 der jeweiligen Teilnehmerstationen 1, 2, 3, 4 trotzdem bereit zum Senden. In diesem Fall kann die Zeitplanungseinheit 15, 25, 35 der jeweiligen Teilnehmerstationen 1, 2, 3, 4 Ihren Rahmen 450, 460 einfach senden.

Gemäß einer Modifikation der zuvor beschriebenen Ausführung ist die Teilnehmerstation-Nummer an mindestens einer anderen Stelle im Rahmen 450, 460 übertragbar. Beispielsweise kann die Teilnehmerstation-Nummer in der Datenphase 452 übertragen werden, insbesondere in dem Datenfeld DF, beispielsweise am Anfang des Datenfelds DF, oder mit dem Datentypfeld (DataType Feld) DT, das in einem Steuerteil des Rahmens 450, 460, insbesondere am Anfang der Datenphase 452 oder am Ende der Arbitrationsphase 451, übertragen wird. Das Datentypfeld gibt den Typ der Daten an, die in dem Datenfeld DF gesendet werden.

Somit ist mindestens eine der Zeitplanungseinheiten 15, 25, 35 der Teilnehmerstationen 1, 2, 3, 4 ausgestaltet, unter Verwendung mindestens einer von dem Bus 40 empfangenen Information eine Zuordnung zu bestimmen, die festlegt, welchen Zeitschlitz der Runde C die Sende-/Empfangseinrichtung 12, 22, 32 zum Senden eines Rahmens für ein Sendesignal auf den Bus 40 verwenden darf. Diese Information ist bei dem zweiten Ausführungsbeispiel und seiner Modifikation die Teilnehmerstation-Nummer.

Bei dem zweiten Ausführungsbeispiel und seiner Modifikation wird somit die Teilnehmerstation-Nummer vom System-Integrator bzw. vom Konfigurator des Bussystems 100 vorgegeben. Daher ist die Reihenfolge der Kommunikation auf dem Bus 40 nicht mehr selbstorganisierend, sondern sie wird vorgegeben, nämlich über die Zuweisung die Teilnehmerstation-Nummer. Die Teilnehmerstationen dürfen dann nur in einer festgelegten Reihenfolge senden, z.B. in aufsteigender Reihenfolge der Teilnehmerstation-Nummer.

Sehr vorteilhaft ist jedoch bei dem zweiten Ausführungsbeispiel und seiner Modifikation, dass eine wieder eingeschaltete Teilnehmerstation aufgrund der Teilnehmerstation-Nummer schneller auf die in der Kommunikation am Bus 40 vorhandenen Zeitschlitz-Nummern S1, S2, S3, S4 synchronisiert ist als bei dem ersten Ausführungsbeispiel. Somit beträgt die zeitliche Verzögerung im ungünstigsten Fall (Worst-Case Delay) für den Buszugriff einer Teilnehmerstation 1, 2, 3, 4 sowohl im Betrieb als auch beim Einschalten nur SN maximale Rahmenlängen. Damit ist die zeitliche Verzögerung nur halb so lang wie bei dem vorangehenden Ausführungsbeispiel. Diese Ausführungsvariante ist auch robuster hinsichtlich des Zählens der Zeitschlitze, da die Zeitschlitznummer auf dem Bus 40 zu sehen ist. Die erste und die zweite Ausführungsvariante haben insbesondere den folgenden Vorteil. Kommt es durch einen Fehler in einer der Zeitplanungseinheiten 15, 25, 35 dazu, das eine Teilnehmerstation im falschen Zeitschlitz sendet, dann führt das lediglich zu einer Arbitration und zu einer eventuellen Verzögerung des Sendens. Jedoch kann ein solcher Fehler nicht zum Zerstören der beiden Rahmen auf dem Bus führen.

Fig. 6 zeigt einen Zeitablauf bei dem Bussystem 100 zur Veranschaulichung einer Kommunikation gemäß einem dritten Ausführungsbeispiel. Hierfür zeigt Fig. 6 in ihrem linken Teil eine Runde mit einer minimalen Rundenzeitdauer T_C_mn, in welcher alle Zeitschlitze S1 bis S4 jeweils mindestens zwei Arbitrations-Bitzeiten haben. Beispielsweise hat der Zeitschlitz S3 eine erste Bitzeit B1_S3 und eine zweite Bitzeit B2_S3. Dasselbe gilt für die anderen Zeitschlitze S1, S2, S4.

Eine Teilnehmerstation 1, 2, 3, 4, die in einem Zeitschlitz S1, S2, S3, S4 ihre Sendegelegenheit TO hat, muss ihren Rahmen im ersten Bit des ihr zugeordneten Zeitschlitzes S1, S2, S3, S4 starten, um einen Rahmen garantiert senden zu können. Somit verstreicht im Zeitschlitz S1, S2, S3, S4 kein Bit. Lässt eine Teilnehmerstation 1, 2, 3, 4 das erste Bit ihres Zeitschlitzes S1, S2, S3, S4 verstreichen, so hat die Teilnehmerstation 1, 2, 3, 4 auch ihre Sendegelegenheit TO verstreichen lassen, die der Teilnehmerstation 1, 2, 3, 4 den Versand eines Rahmes garantiert hätte. Somit möchte die Teilnehmerstation 1, 2, 3, 4 derzeit keinen Rahmen senden.

Als Folge davon kann eine andere Teilnehmerstation 1, 2, 3, 4 nun diesen Zeitschlitz S1, S2, S3, S4 zum Senden nutzen. Es ist jedoch möglich, dass beispielsweise die Teilnehmerstation 1 ihre erste Bitzeit B1_S1 ihres Zeitschlitzes S1 verstreichen lässt, aber dann in der zweiten Bitzeit B2_S1 ihres Zeitschlitzes S1 doch mit dem Senden eines Rahmens beginnt. Somit können bei diesem Beispiel alle Teilnehmerstationen 1, 2, 3, 4 im zweiten Bit B2_S1 des Zeitschlitzes S1einen Rahmen starten. Die Rahmen können auch um diesen freien Zeitschlitz S1 "kämpfen", also am Bus 40 arbitrieren. Damit derjenige Rahmen die Arbitration gewinnt, der die höchste Priorität hat, können die Teilnehmerstationen 1, 2, 3, 4 für ihre Rahmen, die im zweiten Bit eines Zeitschlitzes beginnen, Identifizierer 451x verwenden, die zur Priorität des Rahmens passen. Durch die Arbitration wird sich der Rahmen mit der höchsten Priorität durchsetzen.

Durch diese Ausgestaltung der minimalen Dauer T_S_mn der Zeitschlitze S1 bis S4 ist es möglich, dass eine der Teilnehmerstationen 1, 2, 3, 4 die Sendegelegenheit TO einer anderen Teilnehmerstation nutzt, weil aus einer ungenutzt verstrichenen ersten Bitzeit klar ist, dass die entsprechende Teilnehmerstation ihre garantierte Sendegelegenheit TO nicht genutzt hat.

Bei dem Beispiel von Fig. 6 nutzt die Teilnehmerstation 4 den ihr zugeordneten vierten Zeitschlitz S4 zum Senden des Sendesignals TX4 in einem Rahmen. Zu einem Zeitpunkt t4 während des Zeitschlitzes S4 ist die Teilnehmerstation 3 bereit, einen Rahmen zu senden. Da die Teilnehmerstation 1 keinen Rahmen versendet - die erste Bitzeit B1_S1 verstreicht ungenutzt - sendet die Teilnehmerstation 3 ab dem Zeitpunkt t5 das Sendesignal TX3 als Rahmen in der zweiten Bitzeit B2_S1 des Zeitschlitzes S1. Der zweite und dritte Zeitschlitz S2, S3 wird jeweils von der zugehörigen Teilnehmerstation 2, 3 genutzt. Somit werden die Sendesignale TX2, TX3 jeweils in einem Rahmen auf den Bus 40 gesendet. Da die Teilnehmerstation 4 keinen Rahmen versendet - die erste Bitzeit B1_S4 verstreicht ungenutzt - senden die Teilnehmerstationen 1, 2 ab dem Zeitpunkt t6 Rahmen auf den Bus 40. Bei der folgenden Arbitration gewinnt die Teilnehmerstation 2, so dass das Sendesignal TX2 als Rahmen in dem Zeitschlitz S4 auf den Bus 40 gesendet wird.

Ein Vorteil des vorliegenden Ausführungsbeispiels ist, dass eine deterministische Zuteilung der Kommunikationsbandreite mit einem Datenverkehr mit bestem Aufwand (Best-Effort- Datenverkehr) mischbar ist. Der Datenverkehr mit bestem Aufwand kommt nur zustande, wenn manche Teilnehmerstationen 1, 2, 3, 4 die ihnen zugeteilte Bandbreite, also den Sendeschlitz S1, S2, S3, S4, nicht nutzen.

Ein weiterer großer Vorteil des vorliegenden Ausführungsbeispiels ist, dass die zeitliche Verzögerung im ungünstigsten Fall (Worst-Case Delay) für den Buszugriff dadurch nur minimal zunimmt. Es wird länger, weil die minimale Zeitschlitzdauer T_S_mn länger wird.

Prinzipiell kann die minimale Zeitschlitzdauer T_S_mn alternativ drei oder mehr Arbitrations-Bitzeiten lang sein. Die Teilnehmerstationen 1, 2, 3, 4 am Bus 40 können dann in verschiedene Prioritätsklassen eingeteilt werden. Je niedriger die Prioritätsklasse einer Teilnehmerstation 1, 2, 3, 4, desto später innerhalb eines freibleibenden Zeitschlitzes darf die Teilnehmerstation 1, 2, 3, 4 eine Sendung starten.

Gemäß einer Modifikation des vorliegenden Ausführungsbeispiels ist die Ausgestaltung mit mindestens zwei Bitzeiten dazu verwendbar, dass sich Teilnehmerstationen 1, 2, 3, 4 nach einem Aufwachen oder Einschalten so Re-Integrieren, dass eine sendende Teilnehmerstation 1, 2, 3, 4 nicht benachteiligt wird, indem der sendenden Teilnehmerstation 1, 2, 3, 4 der ihr zugeordnete Zeitschlitz S1, S2, S3, S4 weggenommen wird. Dazu verwendet möglichst jede Teilnehmerstationen 1, 2, 3, 4 zur Re-Integration nur Zeitschlitze S1, S2, S3, S4, die im ersten Bit vom eigentlichen Zeitschlitz-Inhaber nicht verwendet wurden. Sendet die sich re-integrierende Teilnehmerstation der Teilnehmerstationen 1, 2, 3, 4 ab dem zweiten Bit des Zeitschlitzes S1, S2, S3, S4 ihren Rahmen und gewinnt sie die Arbitration und kann den Rahmen erfolgreich senden, das heißt fehlerfrei, so wird ihr anschließend der Zeitschlitz, zugeordnet.

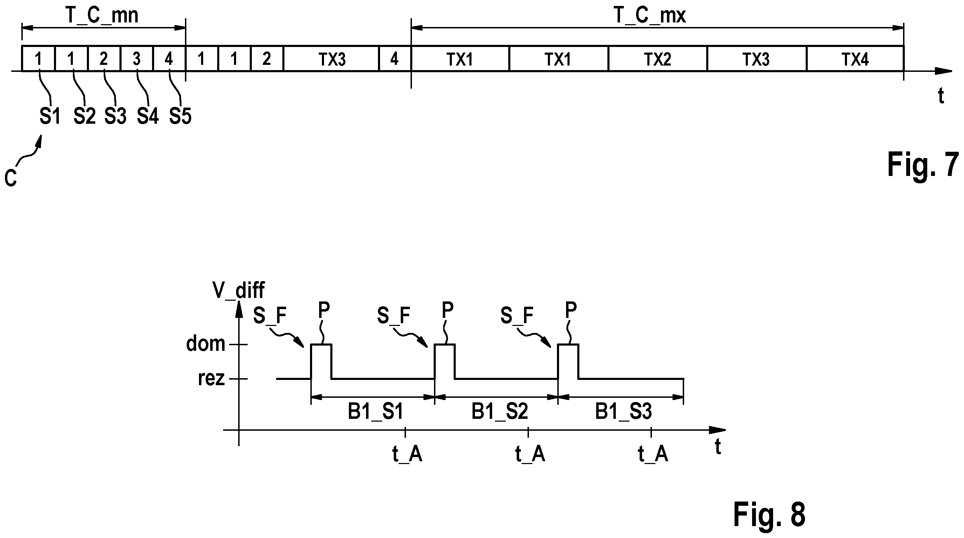

Fig. 7 zeigt einen Zeitablauf bei dem Bussystem 100 zur Veranschaulichung einer Kommunikation gemäß einem vierten Ausführungsbeispiel.

Im Unterschied zu den vorangehenden Ausführungsbeispielen ist die Kommunikationsbandreite am Bus 40 bei dem vorliegenden Ausführungsbeispiel nicht gleichmäßig zwischen den Teilnehmerstation 1, 2, 3, 4 verteilt. Stattdessen wird bei dem vorliegenden Ausführungsbeispiel ein sogenanntes WRR-Verfahren (Weighted Round Robin Verfahren) eingesetzt. Dabei bekommt jede Teilnehmerstation 1, 2, 3, 4 einen weiteren Parameter W (weight = Gewicht), der in der zugehörigen Zeitplanungseinheit 15, 25, 35 bei der Konfiguration einstellbar ist. Der Parameter W gibt die Zahl der Rahmen 450, 460 an, welche die Teilnehmerstation 1, 2, 3, 4 pro Runde C senden darf. Eine Teilnehmerstation 1, 2, 3, 4 bekommt dazu W Zeitschlitze zur Verfügung gestellt. Daher entspricht der in allen Teilnehmerstation 1, 2, 3, 4 eingestellte Parameter SN jetzt nicht mehr der Anzahl der Teilnehmerstationen 1, 2, 3, 4, sondern der Summe aller Werte des Parameters W.

Fig. 7 zeigt ein Beispiel mit vier Teilnehmerstationen 1, 2, 3, 4, bei denen für die Teilnehmerstation 1 der Parameter W = 2 eingestellt ist. Dagegen ist für die anderen Teilnehmerstationen 2, 3, 4 jeweils ein Parameter W = 1 eingestellt. Somit berechnet sich die Anzahl SN der Zeitschlitze als SN = 2 + 1 + 1 + 1 = 5. Demzufolge hat eine Runde C eine Anzahl von 5 Zeitschlitzen, nämlich S1, S2, S3, S4, S5. Hierbei kann die Teilnehmerstation 1 pro Runde zwei Rahmen 450, 460 senden, nämlich in den Zeitschlitzen S1 und S2. Die anderen Teilnehmerstationen 2, 3, 4 können pro Runde C jeweils nur einen Rahmen 450, 460 senden.

Fig. 8 zeigt zur Erläuterung eines fünften Ausführungsbeispiels eine Differenzspannung V-diff, die sich aus der Differenz der Bussignale CAN_H und CAN_L auf dem Bus 40 berechnet.

Gemäß Fig. 8 sendet eine Teilnehmerstation 1, 2, 3, die ihre Sendegelegenheit TO nicht verwendet, einen kurzen Dominantpuls P am Anfang der Bits B1_S1, B1_S2, B1_S3, usw. in ihrem Zeitschlitz S1, S2, S3. Bei dem Beispiel von Fig. 8 wird in jedem Zeitschlitz S1, S2, S3 nur ein Bit, nämlich das Bit B1 gesendet, da die minimale Zeitschlitzdauer T_S_mn hier mit einer Arbitrations-Bitzeit angenommen ist. Die Bits werden von den empfangenden Teilnehmerstationen 1, 2, 3 bei einem Abtastzeitpunkt t_A abgetastet. Wenn die minimale Dauer T_S_mn eines Zeitschlitzes mehreren Arbitrations-Bitzeiten entspricht, dann kann die Teilnehmerstation, der der Zeitschlitz zugeordnet ist, am Anfang jedes Bits einen dominanten Puls P senden, wenn die Teilnehmerstation ihre Sendegelegenheit TO verstreichen lässt.

Hierbei sendet die zugehörige Teilnehmerstation 1, 2, 3 in den rezessiven Bits ihres Zeitschlitzes S1, S2, S3 einen Dominantpuls P von z.B. 200 ns. Alle CAN Teilnehmerstationen 1, 2, 3 synchronisieren sich auf die rezessiv-dominant Flanke S_F des Dominantpulses P. Da die Arbitrations-Bitzeit gemäß der zuvor genannten Spezifikation auf 1000 ns bzw. 1 Mbit/s limitiert ist, ist ein entsprechender Puls P von 200ns nicht einschränkend. Alle Teilnehmerstationen 1, 2, 3 tasten das eigentlich rezessive Bit B1 trotz des Dominantpulses P als rezessiv ab, weil der Puls P am Abtastzeitpunkt t_A schon lange wieder zu Ende ist.

Hierdurch ist es möglich, dass die Teilnehmerstationen 1, 2, 3 die Synchronisation zu den Zeitschlitzen S1, S2, S3 nicht verlieren, auch wenn in der Kommunikation auf dem Bus 40 lange Idle Phasen vorkommen, in denen alle Teilnehmerstationen 1, 2, 3 ihre Sendegelegenheit TO nicht nutzen. Mittels der Dominantpulse P können die Teilnehmerstationen 1, 2, 3 synchronisiert gehalten werden.

Somit kommt das Bussystem 100 mit Takten zurecht, die relativ hohe Toleranzen haben. Hierbei synchronisieren sich die Teilnehmerstationen 1, 2, 3 auf rezessiv-dominant Flanken am Bus 40.

Gemäß einem sechsten Ausführungsbeispiel ist es möglich, dass eine oder mehrere Teilnehmerstationen 1, 2, 3, 4 der vorangehenden Ausführungsbeispiele mehrere Rahmen pro Zeitschlitz S1, S2, S3, S4 senden. Diese Ausgestaltung ist beispielsweise vorteilhaft, um die Kommunikationsbandbreite am Bus 40 gerechter aufzuteilen, wenn beispielsweise die Teilnehmerstation 1 typischerweise kurze Rahmen 460 sendet und die Teilnehmerstation 2 typischerweise lange Rahmen 450 sendet. Kann jede Teilnehmerstation 1, 2 immer nur einen Rahmen in dem ihr zugeordneten Zeitschlitz S1, S2 senden, dann hat die Teilnehmerstation 1 bei den Verfahren gemäß dem ersten und zweiten Ausführungsbeispiel weniger Bandbreite als die Teilnehmerstation 2.

Um mehr Fairness hinsichtlich der Kommunikationsbandbreite zu erreichen als bei dem ersten und zweiten Ausführungsbeispiel, wird beispielsweise der Teilnehmerstation 1 erlaubt, während ihres Zeitschlitzes S1 mehrere kurze Rahmen 450 zu senden. Um fair zu bleiben, sollten die Rahmen 450 in Summe nicht länger sein als ein Rahmen 450 maximaler Länge.

Die Signalisierung, dass von der Teilnehmerstation 1 noch ein Rahmen 460 in dieser Sendegelegenheit TO gesendet wird, kann auf die folgenden Arten geschehen.

Beispielsweise kann hierfür der Identifizierer 451x verwendet werden. Hierbei werden die niederwertigen 4 Bit des Identifizierers (ID) 451x verwendet, um die Teilnehmerstation 1 zu identifizieren. Die nächsten 7 Bit des Identifizierers (ID) 451x werden verwendet, um mitzuteilen, dass noch weitere Rahmen 460 folgen werden. Beispielsweise kann 0x14 signalisieren, dass die Teilnehmerstation 4 einen Rahmen sendet, wobei die 1 signalisiert, dass dem Rahmen weitere Rahmen folgen. Dann könnte 0x04 signalisieren, dass die Teilnehmerstation 4 einen Rahmen sendet, wobei die 0 signalisiert, dass dem Rahmen keine Rahmen folgen.

Gemäß einer anderen Möglichkeit der Signalisierung, dass von der Teilnehmerstation 1 noch ein Rahmen 450 in dieser Sendegelegenheit TO gesendet wird, ist ein Feld DataType (DT) im Kopf (Header) des Rahmens 450 verwendbar. Beispielsweise kann DT=0x30 signalisieren, dass kein anderer Rahmen der gleichen Teilnehmerstation folgt. Daher könnte DT=0x31 signalisieren, dass ein anderer Rahmen der gleichen Teilnehmerstation folgt.

Alternativ ist gemäß noch einer anderen Möglichkeit der Signalisierung ein dediziertes Bit im Kopf (Header) des Rahmens 460 verwendbar.

Alternativ ist gemäß noch einer anderen Möglichkeit der Signalisierung ein Bit oder Byte am Anfang des in Fig. 2 gezeigten Datenfelds DF in der Datenphase 452 verwendbar.

Der Vorteil liegt darin, dass mehr Fairness hinsichtlich der Aufteilung der Kommunikationsbandbreite zwischen Teilnehmerstationen 1, 2, 3, 4 in dem Fall herstellbar ist, in dem die Teilnehmerstationen 1, 2, 3, 4 unterschiedlich lange Rahmen 450, 460 versenden.

Gemäß einem siebenten Ausführungsbeispiel ist es möglich, dass in den Zeitplanungseinheiten 15, 25, 35 die Anzahl SN der Zeitschlitze größer eingestellt wird als die Anzahl N der Teilnehmerstationen ist. In diesem Fall bleibt mindestens ein Zeitschlitz übrig, der keiner der Teilnehmerstationen und somit niemandem am Bus 40 gehört. Kombiniert man dies mit dem dritten Ausführungsbeispiel, wo erläutert wird, wie andere Teilnehmerstationen ungenutzte Zeitschlitze verwenden können - so können die überzähligen Zeitschlitze von jeder Teilnehmerstation genutzt werden.

Da in den überzähligen Zeitschlitzen prinzipiell alle Teilnehmerstationen gleichzeitig senden können und somit um den Bus 40 arbitrieren, entspricht dies einer strikten Prioritäts-Zeitplanung (Strict Priority Scheduling).

Beispielsweise hat der Bus N = 4 Teilnehmerstationen, also die Teilnehmerstationen 1, 2, 3, 4, und SN = 5 Zeitschlitze, also die Zeitschlitze S1, S2, S3, S4, S5. Jeder Teilnehmerstation ist exklusiv ein Zeitschlitz zugeteilt. Da in Zeitschlitz S5 nie ein Knoten sofort senden wird, können die Knoten ab dem zweiten Bit des Zeitschlitzes um den Zeitschlitz S5 arbitrieren.

Alternativ kann dieses siebente Ausführungsbeispiel auch als eine Erweiterung des zweiten Ausführungsbeispiels ausgeführt werden. Die Zeitplanungseinheiten 15, 25, 35 haben nicht nur die Anzahl SN der Zeitschlitze konfiguriert, sondern auch die Anzahl der Zeitschlitze, die allen Teilnehmerstationen, beispielsweise am Ende der Runde C, zur Verfügung stehen. Wenn die Zeitschlitze den Teilnehmerstationen fest zugeordnet sind und die Zeitschlitznummer in den gesendeten Rahmen enthalten ist, dann ist eine Zeitplanungseinheit in der Lage, den Zeitschlitz S5 (aus dem Beispiel zuvor) zu erkennen. Wenn der Zeitschlitz S5 gekommen ist, können hier einfach alle Teilnehmerstationen um den Bus 40 arbitrieren. Die Kombination mit dem dritten Ausführungsbeispiel ist nicht mehr zwingend nötig.

Da jede der Teilnehmerstationen 1, 2, 3, 4 in dem Zeitschlitz S5 senden kann, erfolgt die Zuteilung der Sendegelegenheit TO in dem Zeitschlitz S5 strikt gemäß der Priorität also dem Identifizierer 451x der Rahmen, welche die Teilnehmerstationen 1, 2, 3, 4 in dem Zeitschlitz S5 senden (Strict Priority Scheduling). Der Rahmen Identifizierer 451x der Nachrichten 450, 460 ist in diesem Zeitschlitz S5 sinnvoller Weise entsprechend der tatsächlichen Priorität der Nachrichten zu wählen, damit sich der Rahmen mit der höchsten Priorität durchsetzen kann.

Gemäß einem achten Ausführungsbeispiel ist es möglich, dass die Arbitrationsphase 451 bei der Kommunikation ganz oder zumindest teilweise weggelassen wird. Dadurch erfolgt im normalen Betrieb bei einer deterministischen Zeitplanung (Scheduling) mit den Zeitplanungseinheiten 15, 25, 35 keine Arbitration, weil jeder Teilnehmerstationen 1, 2, 3, 4 ein oder mehrere Zeitschlitze S1, S2, S3, S4 zugeteilt sind. Demzufolge kann nach der Zuordnung der Zeitschlitze S1, S2, S3, S4 bzw. in diesem Betriebspunkt, die Arbitrationsphase 451 vor und nach der Datenphase 452 ganz oder zumindest teilweise weggelassen werden.

Dadurch ist die Arbitrationsphase 451 nun kürzer als bei CAN, also kürzer als derzeit in der ISO 11898-1:2015 festgelegt.

In einem solchen Fall sind die folgenden zwei Betriebsmodi vorhanden. In einem ersten Betriebsmodus verwenden alle Teilnehmerstationen 1, 2, 3, 4 beim Einschalten normale CAN Rahmen oder CAN XL Rahmen, weil es zur Arbitration auf dem Bus kommen kann. Sobald alle Teilnehmerstationen 1, 2, 3, 4 in Betrieb sind und alle Teilnehmerstationen 1, 2, 3, 4 auf die Zeitschlitze S1, S2, S3, S4 synchronisiert sind, kommt daher keine Arbitration mehr vor. Daher kann nun in den zweiten Betriebsmodus gewechselt werden, bei welchem die Arbitrationsphase 451 ganz oder zumindest teilweise weggelassen wird.

Damit kann vermieden werden, dass die Arbitrationsphase 451 mit ihren relativ langen Bits, die vor und nach der Datenphase 452 angeordnet sind, zu einem relevanten Überhang (Overhead) bei der Datenübertragung auf dem Bus 40 und damit zu einer geringeren Netto-Datenrate führt.

Gemäß einem neunten Ausführungsbeispiel ist es möglich, dass die Identifizierer 451x, die zum Senden der Rahmen 450, 460 verwendet werden, in zwei Bereiche aufgeteilt werden. Erstens in einen hoch-prioren Bereich, der für diejenigen Rahmen 450, 460 verwendet wird, die von einer Teilnehmerstation in dem der Teilnehmerstation zugeordneten Zeitschlitz gesendet wird. Und zweitens in einen nieder-prioren Bereich, der für diejenigen Rahmen verwendet wird, die in einem Zeitschlitz gesendet werden, der der sendenden Teilnehmerstation nicht exklusiv zugeordnet ist.

Um zu versuchen, einen Zeitschlitz zu verwenden, der einer anderen Teilnehmerstation exklusiv zugeordnet ist, muss beispielsweise die Teilnehmerstation 1, der der beispielsweise derzeit präsente Zeitschlitz S3 nicht exklusiv zugeordnet ist, einfach beim Sendeversuch des Rahmens 450, 460 einen Identifizierer 451x aus dem nieder-prioren Bereich verwenden. Damit ist sichergestellt, dass beispielsweise die Teilnehmerstation 3, der bei diesem Beispiel der derzeit präsente Zeitschlitz S3 exklusiv zugeordnet ist, die Arbitration immer gewinnen würde und somit dieser Zeitschlitz S3 der Teilnehmerstation 3 exklusiv zugeordnet bleibt. Wenn jedoch bei diesem Beispiel mindestens eine der anderen Teilnehmerstation 1, 2, 4 etwas zu senden hat, kann diese andere Teilnehmerstation 1, 2, 4 gleich zu Beginn des Zeitschlitzes S3 versuchen, einen Rahmen 450, 460 mit einem Identifzierer 451x aus dem nieder-prioren Bereich zu senden.

Dies hat den Vorteil, dass bei dem vorliegenden Ausführungsbeispiel die minimale Zeitschlitzdauer T_S_mn bei einer Arbitrations-Bitzeit verbleibt, wohingegen bei dem dritten Ausführungsbeispiel die minimale Zeitschlitzdauer T_S_mn zwei Arbitrations-Bitzeiten beträgt.

Alle zuvor beschriebenen Ausgestaltungen der Teilnehmerstationen 1, 2, 3, 4, 10, 20, 30, des Bussystems 100 und die darin ausgeführten Verfahren können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Auch wenn die Erfindung zuvor am Beispiel des CAN-Bussystems beschrieben ist, kann die Erfindung bei jedem Kommunikationsnetzwerk und/oder Kommunikationsverfahren eingesetzt werden. Insbesondere können bei dem Kommunikationsnetzwerk und/oder Kommunikationsverfahren zwei verschiedene Kommunikationsphasen verwendet werden, wie zuvor in Bezug auf die Kommunikationsphasen 451, 452 beschrieben.

Insbesondere kann das Bussystem 100 gemäß den Ausführungsbeispielen ein Kommunikationsnetzwerk sein, bei welchem Daten seriell mit zwei verschiedenen Bitraten übertragbar sind. Es ist vorteilhaft, jedoch nicht zwangsläufige Voraussetzung, dass bei dem Bussystem 100 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 100 der Ausführungsbeispiele ist beliebig. Insbesondere kann die Teilnehmerstation 20 in dem Bussystem 100 entfallen. Es ist möglich, dass eine oder mehrere der Teilnehmerstationen 10 oder 30 in dem Bussystem 100 vorhanden sind. Denkbar ist, dass alle Teilnehmerstationen in dem Bussystem 100 gleich ausgestaltet sind, also nur Teilnehmerstation 10 oder nur Teilnehmerstation 30 vorhanden sind.

Die deterministische Zeitplanung (Scheduling), die von den Zeitplanungseinheiten 15, 25, 35 ausgeführt wird, lässt sich zu beliebiger Zeit anschalten oder ausschalten, um sich an die aktuellen Betriebszustände des Bussystems 100 anzupassen. Beispielsweise wird im Echtzeitbetrieb die deterministische Zeitplanung (Scheduling) verwendet. Dagegen kann die deterministische Zeitplanung (Scheduling) jedoch in der Werkstatt beim Aufspielen (Flashen) neuer Firmware-Versionen ausgeschaltet werden.

Möglich ist zusätzlich oder alternativ, dass bei einem Betrieb der deterministischen Zeitplanung (Scheduling) die zuvor beschriebenen Parameter SN, W, die von den Zeitplanungseinheiten 15, 25, 35 verwendet werden, im laufenden Betrieb beliebig änderbar sind.

## Patentansprüche

1. Teilnehmerstation (10; 20; 30; 1 bis 4) für ein serielles Bussystem (100), mit
einer Kommunikationssteuereinrichtung (11; 21; 31) zum Steuern einer Kommunikation der Teilnehmerstation (10; 20; 30; 1 bis 4) mit mindestens einer anderen Teilnehmerstation (10; 20; 30; 1 bis 4) des Bussystems (100),
einer Sende-/Empfangseinrichtung (12; 22; 32) zum Senden eines von der Kommunikationssteuereinrichtung (11; 21; 31) erzeugten Sendesignals (TX1; TX2; TX3; TX4) in einem Rahmen (450; 460) auf einen Bus (40) des Bussystems (100), und
einer Zeitplanungseinheit (15; 25; 35) zur Planung eines zeitlichen Zugriffs der Teilnehmerstation (10; 20; 30; 1 bis 4) auf den Bus (40) in mindestens einem Zeitschlitz (S1 bis S4) einer Runde (C) von zeitlich aufeinanderfolgenden Zeitschlitzen (S1 bis S4),
wobei in einer Runde (C) für jede Teilnehmerstation (10; 20; 30; 1 bis 4) des Busses (40) zum Senden ihres Sendesignals (TX1; TX2; TX3; TX4) mindestens ein Zeitschlitz (S1 bis S4) vorgesehen ist und sich die Runde (C) zyklisch wiederholt, und
wobei die Zeitplanungseinheit (15; 25; 35) ausgestaltet ist, mit den anderen Teilnehmerstationen (10; 20; 30; 1 bis 4) des Busses (40) im Betrieb des Bussystems (100), in einer Startrunde (C_SU) nach dem Einschalten des Bussystems (1) oder nach einem schlafen gehen und wieder aufwachen einer der Teilnehmerstationen (10; 20; 30; 1 bis 4), unter Verwendung einer Priorität des Sendesignals (TX1; TX2; TX3; TX4) für nachfolgende Runden (C) der sich zyklisch wiederholenden Runde (C) festzulegen, welchen Zeitschlitz (S1 bis S4) der Startrunde (C_SU) die Sende-/Empfangseinrichtung (12; 22; 32) zum Senden des Rahmens (450; 460) für das Sendesignal (TX1; TX2; TX3; TX4) auf den Bus (40) verwenden darf,
wobei die Zuordnung der Zeitschlitze (S1 bis S4) zu den Teilnehmerstationen (10; 20; 30; 1 bis 4) in den nachfolgenden Runden (C) unverändert bleibt, wodurch die Sendereihenfolge in den nachfolgenden Runden (C) unverändert ist.

2. Teilnehmerstation (10; 20; 30; 1 bis 4) nach Anspruch 1, wobei die Zeitplanungseinheit (15; 25; 35) ausgestaltet ist, mit den anderen Teilnehmerstationen (10; 20; 30; 1 bis 4) des Busses (40) eine Sendereihenfolge auf den Bus (40) für die Teilnehmerstationen (10; 20; 30; 1 bis 4) des Busses (40) zumindest zeitweise dynamisch und/oder zumindest zeitweise statisch festzulegen.

3. Teilnehmerstation (10; 20; 30; 1 bis 4) nach Anspruch 1 oder 2,
wobei die Zeitplanungseinheit (15; 25; 35) ein Zählmodul (151; 251; 351) aufweist, das ausgestaltet ist, seinen Zählwert bei jedem von dem Bus (40) empfangenen Rahmen (450; 460) zu inkrementieren und bei jeder für einen Zeitschlitz (S1, S2, S3, S4) ungenutzt verstrichenen Sendegelegenheit (TO) zu inkrementieren, und
wobei das Zählmodul (151; 251; 351) ausgestaltet ist, seinen Zählwert auf einen Startwert zurückzusetzen, wenn der Zählwert gleich der Anzahl der Zeitschlitze (S1 bis S4) ist, die in der Runde (C) vorgesehen sind.

4. Teilnehmerstation (10; 20; 30; 1 bis 4) nach Anspruch 3, wobei das Zählmodul (151; 251; 351) ausgestaltet ist, seinen Zählwert bei jedem von dem Bus (40) empfangenen Rahmen (450; 460) nach Empfang eines Bits zu inkrementieren, welches den Anfang eines Rahmens (450; 460) signalisiert, auch wenn der Rahmen (450; 460) später von der den Rahmen (450; 460) sendenden Teilnehmerstation (10; 20; 30; 1 bis 4) wegen eines Fehlers abgebrochen wird.

5. Teilnehmerstation (10; 20; 30; 1 bis 4) nach Anspruch 3 oder 4,
wobei die Zeitplanungseinheit (15; 25; 35) ausgestaltet ist, einen zeitlichen Zugriff der Teilnehmerstation (10; 20; 30; 1 bis 4) auf den Bus (40) für den nächsten Zeitschlitz (S1 bis S4) der Runde (C) freizugeben, wenn der Zählwert des Zählmoduls (151; 251; 351) gleich der Anzahl der Zeitschlitze (S1 bis S4) ist, die in der Runde (C) vorgesehen sind, und
wobei das Zählmodul (151; 251; 351) ausgestaltet ist, seinen Zählwert auf 1 zu setzen, wenn die Sende-/Empfangseinrichtung (12; 22; 32) ein von der Kommunikationssteuereinrichtung (11; 21; 31) erzeugtes Sendesignal (TX1; TX2; TX3; TX4) in einem Rahmen (450; 460) auf den Bus (40) gesendet hat oder die Sendegelegenheit (TO) ungenutzt verstreichen lässt.

6. Teilnehmerstation (10; 20; 30; 1 bis 4) nach einem der vorangehenden Ansprüche, wobei die Zeitplanungseinheit (15; 25; 35) ausgestaltet ist, einen zeitlichen Zugriff der Teilnehmerstation (10; 20; 30; 1 bis 4) auf den Bus (40) in einem Zeitschlitz (S1 bis S4) der Runde (C) freizugeben, wenn die Teilnehmerstation (10; 20; 30; 1 bis 4) oder eine andere Teilnehmerstation (10; 20; 30; 1 bis 4) des Busses (40) ihre Sendegelegenheit (TO) ungenutzt verstreichen lässt.

7. Teilnehmerstation (10; 20; 30; 1 bis 4) nach einem der vorangehenden Ansprüche,
wobei die Kommunikationssteuereinrichtung (11; 21; 31) ausgestaltet ist, zumindest in einer Einschaltphase (C_E) des Busses (40) den Rahmen (450; 460) in eine erste Kommunikationsphase (451) und eine zweite Kommunikationsphase (452) aufzuteilen, und
wobei in der ersten Kommunikationsphase (451) ausgehandelt wird, welche der Teilnehmerstationen (10, 20, 30) des Busses (40) in der nachfolgenden zweiten Kommunikationsphase (452) einen zumindest zeitweise exklusiven, kollisionsfreien Zugriff auf den Bus (40) bekommt.

8. Teilnehmerstation (10; 20; 30; 1 bis 4) nach Anspruch 7,
wobei die Anzahl (SN) der Zeitschlitze (S1 bis S4) pro Runde (C) größer ist als die Anzahl der Zeitschlitze (S1 bis S4), die den Teilnehmerstationen (10; 20; 30; 1 bis 4) des Busses (40) pro Runde (C) zugeordnet sind, und
wobei in einem Zeitschlitz (S5), der keiner der Teilnehmerstationen (10; 20; 30; 1 bis 4) des Busses (40) zugeordnet ist, in der ersten Kommunikationsphase (451) ausgehandelt wird, welche der Teilnehmerstationen (10, 20, 30) des Busses (40) in der nachfolgenden zweiten Kommunikationsphase (452) einen zumindest zeitweise exklusiven, kollisionsfreien Zugriff auf den Bus (40) bekommt.

9. Teilnehmerstation (10; 30) nach Anspruch 7 oder 8,
wobei die minimale Dauer eines Zeitschlitzes (S1 bis S4) eine Bitzeit eines Bits der ersten Kommunikationsphase (451) ist, und
wobei die Zeitplanungseinheit (15; 25; 35) optional ausgestaltet ist, in einem Zeitschlitz (S1 bis S4), der der Teilnehmerstation (10; 20; 30; 1 bis 4) zugeordnet ist, einen Rahmen (450; 460) mit einer Priorität zu senden, die höher ist als eine Priorität eines Rahmens (450; 460), welchen die Zeitplanungseinheit (15; 25; 35) ausgestaltet ist, in einem Zeitschlitz (S1 bis S4) zu senden, der einer anderen Teilnehmerstation (10; 20; 30; 1 bis 4) des Busses (40) zugeordnet ist.

10. Teilnehmerstation (10; 30) nach Anspruch 7 oder 8,
wobei die minimale Dauer eines Zeitschlitzes (S1 bis S4) zwei Bitzeiten eines Bits der ersten Kommunikationsphase (451) ist, und
wobei die Zeitplanungseinheit (15; 25; 35) ausgestaltet ist, einen zeitlichen Zugriff der Teilnehmerstation (10; 20; 30; 1 bis 4) auf den Bus (40) in dem zweiten Bit (B2_S1) eines Zeitschlitzes (S1 bis S4) der Runde (C) freizugeben, wenn eine andere Teilnehmerstation (10; 20; 30; 1 bis 4) des Busses (40) in dem ersten Bit (B1_S1) des Zeitschlitzes (S1 bis S4) ihre Sendegelegenheit (TO) ungenutzt verstreichen lässt.

11. Teilnehmerstation (10; 20; 30; 1 bis 4) nach einem der vorangehenden Ansprüche,
wobei die Kommunikationssteuereinrichtung (11; 21; 31) ausgestaltet ist, in dem Sendesignal (TX1; TX2; TX3; TX4) eine Teilnehmerstation-Nummer anzuordnen, die auf dem Bus (40) exklusiv der Teilnehmerstation (10; 20; 30; 1 bis 4) zugeordnet ist, und
wobei die Zeitplanungseinheit (15; 25; 35) zur Freigabe eines zeitlichen Zugriffs der Teilnehmerstation (10; 20; 30; 1 bis 4) auf den Bus (40) in dem der Teilnehmerstation (10; 20; 30; 1 bis 4) zugeordneten Zeitschlitz (S1 bis S4) der Runde (C) bereit ist, wenn die Zeitplanungseinheit (15; 25; 35) eine Teilnehmerstation-Nummer in einem von dem Bus empfangenen Rahmen (450; 460) auswerten kann.

12. Teilnehmerstation (10; 20; 30; 1 bis 4) nach einem der vorangehenden Ansprüche, wobei die Anzahl der Zeitschlitze (S1 bis S4), die der Teilnehmerstation (10; 20; 30; 1 bis 4) pro Runde (C) zugeordnet sind, zumindest zeitweise ungleich einer Anzahl von Zeitschlitzen (S1 bis S4) ist, die einer anderen Teilnehmerstation (10; 20; 30; 1 bis 4) des Busses (40) pro Runde (C) zugeordnet sind.

13. Teilnehmerstation (10; 20; 30; 1 bis 4) nach einem der vorangehenden Ansprüche,
wobei die Teilnehmerstation (10; 20; 30; 1 bis 4) ausgestaltet ist, pro Zeitschlitz (S1 bis S4) mehr als einen Rahmen (450; 460) auf den Bus (40) zu senden, und/oder
wobei die Anzahl der Rahmen (450; 460), welche die Teilnehmerstation (10; 20; 30; 1 bis 4) pro Zeitschlitz (S1 bis S4) auf den Bus (40) senden darf, zumindest zeitweise ungleich einer Anzahl von Rahmen (450; 460) ist, die eine andere Teilnehmerstation (10; 20; 30; 1 bis 4) des Busses (40) pro Zeitschlitz (S1 bis S4) auf den Bus (40) senden darf.

14. Teilnehmerstation (10; 20; 30; 1 bis 4) nach einem der vorangehenden Ansprüche, wobei die Kommunikationssteuereinrichtung (11; 21; 31) ausgestaltet ist, am Anfang eines rezessiven Bits in dem der Teilnehmerstation zugeordneten Zeitschlitz einen Dominantpuls (P) zu senden, der kürzer als die Bitzeit des rezessiven Bits (B1_S1) ist, wenn die Kommunikationssteuereinrichtung (11; 21; 31) ihre Sendegelegenheit (TO) ungenutzt verstreichen lässt.

15. Teilnehmerstation (10; 20; 30; 1 bis 4) nach einem der vorangehenden Ansprüche, wobei die Teilnehmerstation (10; 20; 30; 1 bis 4) derart ausgestaltet ist, dass die Zeitplanungseinheit (15; 25; 35) je nach zeitlichen Anforderungen an die Kommunikation auf dem Bus (40) ein- oder ausschaltbar ist, oder dass ein Betriebsmodus der Zeitplanungseinheit (15; 25; 35) durch Konfiguration von vorbestimmten Parametern (SN, W) im laufenden Betrieb des Bussystems (100) änderbar ist, wobei der Betriebsmodus der Zeitplanungseinheit (15; 25; 35) einen vorbestimmten Modus einer Kommunikation auf dem Bus (40) festlegt.

16. Bussystem (1), mit
einem Bus (40), und
mindestens zwei Teilnehmerstationen (10; 20; 30; 1 bis 4) nach einem der vorangehenden Ansprüche,
wobei die mindestens zwei Teilnehmerstationen (10; 20; 30; 1 bis 4) über den Bus (40) derart miteinander verbunden sind, dass sie seriell miteinander kommunizieren können.

17. Verfahren zur Kommunikation in einem seriellen Bussystem (100), wobei das Verfahren mit einer Teilnehmerstation (10; 20; 30; 1 bis 4) des Bussystems (100) ausgeführt wird, die eine Kommunikationssteuereinrichtung (11; 21; 31) und eine Sende-/Empfangseinrichtung (12; 22; 32) aufweist, wobei das Verfahren die Schritte aufweist,
Steuern, mit einer Kommunikationssteuereinrichtung (11; 21; 31), einer Kommunikation der Teilnehmerstation (10; 20; 30; 1 bis 4) mit mindestens einer anderen Teilnehmerstation (10; 20; 30; 1 bis 4) des Bussystems (100), und
Senden, mit einer Sende-/Empfangseinrichtung (12; 22; 32), eines von der Kommunikationssteuereinrichtung (11; 21; 31) erzeugten Sendesignals (TX1; TX2; TX3; TX4) in einem Rahmen (450; 460) auf einen Bus (40) des Bussystems (100) gemäß der Planung einer Zeitplanungseinheit (15; 25; 35), welche einen zeitlichen Zugriff der Teilnehmerstation (10; 20; 30; 1 bis 4) auf den Bus (40) in mindestens einem Zeitschlitz (S1 bis S4) einer Runde (C) von zeitlich aufeinanderfolgenden Zeitschlitzen (S1 bis S4) plant,
wobei in einer Runde (C) für jede Teilnehmerstation (10; 20; 30; 1 bis 4) des Busses (40) zum Senden ihres Sendesignals (TX1; TX2; TX3; TX4) mindestens ein Zeitschlitz (S1 bis S4) vorgesehen ist und sich die Runde (C) zyklisch wiederholt, und
wobei die Zeitplanungseinheit (15; 25; 35) mit den anderen Teilnehmerstationen (10; 20; 30; 1 bis 4) des Busses (40) im Betrieb des Bussystems (100) unter Verwendung einer Priorität des Sendesignals (TX1; TX2; TX3; TX4), in einer Startrunde (C_SU) nach dem Einschalten des Bussystems (1) oder nach einem schlafen gehen und wieder aufwachen einer der Teilnehmerstationen (10; 20; 30; 1 bis 4), unter Verwendung einer Priorität des Sendesignals (TX1; TX2; TX3; TX4) für nachfolgende Runden (C) festlegt, welchen Zeitschlitz (S1 bis S4) der ersten Runde (C) die Sende-/Empfangseinrichtung (12; 22; 32) zum Senden des Rahmens (450; 460) für das Sendesignal (TX1; TX2; TX3; TX4) auf den Bus (40) verwenden darf,
wobei die Zuordnung der Zeitschlitze (S1 bis S4) zu den Teilnehmerstationen (10; 20; 30; 1 bis 4) in den nachfolgenden Runden (C) unverändert bleibt, wodurch die Sendereihenfolge in den nachfolgenden Runden (C) unverändert ist.

## Claims

1. Subscriber station (10; 20; 30; 1 to 4) for a serial bus system (100), having
a communication control device (11; 21; 31) for controlling communication between the subscriber station (10; 20; 30; 1 to 4) and at least one other subscriber station (10; 20; 30; 1 to 4) of the bus system (100),
a transceiver device (12; 22; 32) for transmitting a transmit signal (TX1; TX2; TX3; TX4) generated by the communication control device (11; 21; 31) onto a bus (40) of the bus system (100) in a frame (450; 460), and
a scheduling unit (15; 25; 35) for scheduling temporal access to the bus (40) by the subscriber station (10; 20; 30; 1 to 4) in at least one time slot (S1 to S4) of a round (C) of temporally successive time slots (S1 to S4),
wherein, in a round (C), at least one time slot (S1 to S4) is provided for each subscriber station (10; 20; 30; 1 to 4) of the bus (40) for the purpose of transmitting its transmit signal (TX1; TX2; TX3; TX4), and the round (C) repeats cyclically, and
wherein the scheduling unit (15; 25; 35) is configured to determine, with the other subscriber stations (10; 20; 30; 1 to 4) of the bus (40), during operation of the bus system (100), in a starting round (C_SU) after the bus system (1) has been switched on or after one of the subscriber stations (10; 20; 30; 1 to 4) has gone to sleep and woken up again, using a priority of the transmit signal (TX1; TX2; TX3; TX4) for subsequent rounds (C) of the cyclically repeating round (C), which time slot (S1 to S4) of the starting round (C_SU) can be used by the transceiver device (12; 22; 32) to transmit the frame (450; 460) for the transmit signal (TX1; TX2; TX3; TX4) onto the bus (40),
wherein the assignment of the time slots (S1 to S4) to the subscriber stations (10; 20; 30; 1 to 4) remains unchanged in the subsequent rounds (C), as a result of which the transmission sequence is unchanged in the subsequent rounds (C).

2. Subscriber station (10; 20; 30; 1 to 4) according to Claim 1, wherein the scheduling unit (15; 25; 35) is configured to determine at least occasionally dynamically and/or at least occasionally statically, with the other subscriber stations (10; 20; 30; 1 to 4) of the bus (40), a transmission sequence onto the bus (40) for the subscriber stations (10; 20; 30; 1 to 4) of the bus (40) .

3. Subscriber station (10; 20; 30; 1 to 4) according to Claim 1 or 2,
wherein the scheduling unit (15; 25; 35) has a counting module (151; 251; 351) which is configured to increment its count value for each frame (450; 460) received from the bus (40) and to increment its count value for each transmission opportunity (TO) that has passed without use for a time slot (S1, S2, S3, S4), and
wherein the counting module (151; 251; 351) is configured to reset its count value to a starting value if the count value is equal to the number of time slots (S1 to S4) provided in the round (C).

4. Subscriber station (10; 20; 30; 1 to 4) according to Claim 3, wherein the counting module (151; 251; 351) is configured to increment its count value for each frame (450; 460) received from the bus (40) after receiving a bit which signals the start of a frame (450; 460), even if the frame (450; 460) is subsequently aborted by the subscriber station (10; 20; 30; 1 to 4) transmitting the frame (450; 460) owing to an error.

5. Subscriber station (10; 20; 30; 1 to 4) according to Claim 3 or 4,
wherein the scheduling unit (15; 25; 35) is configured to enable temporal access to the bus (40) by the subscriber station (10; 20; 30; 1 to 4) for the next time slot (S1 to S4) of the round (C) if the count value of the counting module (151; 251; 351) is equal to the number of time slots (S1 to S4) provided in the round (C), and
wherein the counting module (151; 251; 351) is configured to set its count value to 1 if the transceiver device (12; 22; 32) has transmitted a transmit signal (TX1; TX2; TX3; TX4) generated by the communication control device (11; 21; 31) onto the bus (40) in a frame (450; 460) or allows the transmission opportunity (TO) to pass without use.

6. Subscriber station (10; 20; 30; 1 to 4) according to one of the preceding claims, wherein the scheduling unit (15; 25; 35) is configured to enable temporal access to the bus (40) by the subscriber station (10; 20; 30; 1 to 4) in a time slot (S1 to S4) of the round (C) if the subscriber station (10; 20; 30; 1 to 4) or another subscriber station (10; 20; 30; 1 to 4) of the bus (40) allows its transmission opportunity (TO) to pass without use.

7. Subscriber station (10; 20; 30; 1 to 4) according to one of the preceding claims,
wherein the communication control device (11; 21; 31) is configured to divide the frame (450; 460) into a first communication phase (451) and a second communication phase (452) at least in a switch-on phase (C_E) of the bus (40), and
wherein negotiation takes place in the first communication phase (451) in order to determine which of the subscriber stations (10, 20, 20) of the bus (40) is granted at least temporarily exclusive, collision-free access to the bus (40) in the subsequent, second communication phase (452) .

8. Subscriber station (10; 20; 30; 1 to 4) according to Claim 7,
wherein the number (SN) of time slots (S1 to S4) for each round (C) is greater than the number of time slots (S1 to S4) assigned to the subscriber stations (10; 20; 30; 1 to 4) of the bus (40) for each round (C), and
wherein, in a time slot (S5) which is not assigned to any of the subscriber stations (10; 20; 30; 1 to 4) of the bus (40), negotiation takes place in the first communication phase (451) in order to determine which of the subscriber stations (10, 20, 30) of the bus (40) is granted at least temporarily exclusive, collision-free access to the bus (40) in the subsequent, second communication phase (452).

9. Subscriber station (10; 30) according to Claim 7 or 8,
wherein the minimum duration of a time slot (S1 to S4) is a bit time of a bit of the first communication phase (451), and
wherein the scheduling unit (15; 25; 35) is optionally configured, in a time slot (S1 to S4) which is assigned to the subscriber station (10; 20; 30; 1 to 4), to transmit a frame (450; 460) with a priority that is higher than a priority of a frame (450; 460) which the scheduling unit (15; 25; 35) is configured to transmit in a time slot (S1 to S4) which is assigned to another subscriber station (10; 20; 30; 1 to 4) of the bus (40).

10. Subscriber station (10; 30) according to Claim 7 or 8,
wherein the minimum duration of a time slot (S1 to S4) is two bit times of a bit of the first communication phase (451), and
wherein the scheduling unit (15; 25; 35) is configured to enable temporal access to the bus (40) by the subscriber station (10; 20; 30; 1 to 4) in the second bit (B2_S1) of a time slot (S1 to S4) of the round (C) if another subscriber station (10; 20; 30; 1 to 4) of the bus (40) allows its transmission opportunity (TO) to pass without use in the first bit (B1_S1) of the time slot (S1 to S4) .

11. Subscriber station (10; 20; 30; 1 to 4) according to one of the preceding claims,
wherein the communication control device (11; 21; 31) is configured to arrange, in the transmit signal (TX1; TX2; TX3; TX4), a subscriber station number which is exclusively assigned to the subscriber station (10; 20; 30; 1 to 4) on the bus (40), and
wherein the scheduling unit (15; 25; 35) is ready to enable temporal access to the bus (40) by the subscriber station (10; 20; 30; 1 to 4) in the time slot (S1 to S4) of the round (C) that is assigned to the subscriber station (10; 20; 30; 1 to 4) if the scheduling unit (15; 25; 35) can evaluate a subscriber station number in a frame (450; 460) received from the bus.

12. Subscriber station (10; 20; 30; 1 to 4) according to one of the preceding claims, wherein the number of time slots (S1 to S4) assigned to the subscriber station (10; 20; 30; 1 to 4) for each round (C) is at least occasionally not equal to a number of time slots (S1 to S4) assigned to another subscriber station (10; 20; 30; 1 to 4) of the bus (40) for each round (C).

13. Subscriber station (10; 20; 30; 1 to 4) according to one of the preceding claims,
wherein the subscriber station (10; 20; 30; 1 to 4) is configured to transmit more than one frame (450; 460) onto the bus (40) for each time slot (S1 to S4), and/or
wherein the number of frames (450; 460) which can be transmitted by the subscriber station (10; 20; 30; 1 to 4) onto the bus (40) for each time slot (S1 to S4) is at least occasionally not equal to a number of frames (450; 460) which can be transmitted onto the bus (40) by another subscriber station (10; 20; 30; 1 to 4) of the bus (40) for each time slot (S1 to S4).

14. Subscriber station (10; 20; 30; 1 to 4) according to one of the preceding claims, wherein the communication control device (11; 21; 31) is configured to transmit, at the start of a recessive bit in the time slot assigned to the subscriber station, a dominant pulse (P), which is shorter than the bit time of the recessive bit (B1_S1), if the communication control device (11; 21; 31) allows its transmission opportunity (TO) to pass without use.

15. Subscriber station (10; 20; 30; 1 to 4) according to one of the preceding claims, wherein the subscriber station (10; 20; 30; 1 to 4) is configured such that the scheduling unit (15; 25; 35) can be switched on or off depending on the temporal requirements imposed on the communication on the bus (40), or such that an operating mode of the scheduling unit (15; 25; 35) can be changed by configuring predetermined parameters (SN, W) during ongoing operation of the bus system (100), wherein the operating mode of the scheduling unit (15; 25; 35) defines a predetermined mode of communication on the bus (40) .

16. Bus system (1) having
a bus (40), and
at least two subscriber stations (10; 20; 30; 1 to 4) according to one of the preceding claims,
wherein the at least two subscriber stations (10; 20; 30; 1 to 4) are interconnected via the bus (40) in such a way that they can communicate serially with one another.

17. Method for communicating in a serial bus system (100), wherein the method is carried out with a subscriber station (10; 20; 30; 1 to 4) of the bus system (100) which has a communication control device (11; 21; 31) and a transceiver device (12; 22; 32), wherein the method has the following steps:
controlling, with a communication control device (11; 21; 31), communication between the subscriber station (10; 20; 30; 1 to 4) and at least one other subscriber station (10; 20; 30; 1 to 4) of the bus system (100), and
transmitting, with a transceiver device (12; 22; 32), a transmit signal (TX1; TX2; TX3; TX4) generated by the communication control device (11; 21; 31) onto a bus (40) of the bus system (100) in a frame (450; 460) according to the scheduling of a scheduling unit (15; 25; 35) which schedules temporal access to the bus (40) by the subscriber station (10; 20; 30; 1 to 4) in at least one time slot (S1 to S4) of a round (C) of temporally successive time slots (S1 to S4),
wherein, in a round (C), at least one time slot (S1 to S4) is provided for each subscriber station (10; 20; 30; 1 to 4) of the bus (40) for the purpose of transmitting its transmit signal (TX1; TX2; TX3; TX4), and the round (C) repeats cyclically, and
wherein the scheduling unit (15; 25; 35) determines, with the other subscriber stations (10; 20; 30; 1 to 4) of the bus (40), during operation of the bus system (100), using a priority of the transmit signal (TX1; TX2; TX3; TX4), in a starting round (C_SU) after the bus system (1) has been switched on or after one of the subscriber stations (10; 20; 30; 1 to 4) has gone to sleep and woken up again, using a priority of the transmit signal (TX1; TX2; TX3; TX4) for subsequent rounds (C), which time slot (S1 to S4) of the first round (C) can be used by the transceiver device (12; 22; 32) to transmit the frame (450; 460) for the transmit signal (TX1; TX2; TX3; TX4) onto the bus (40), wherein the assignment of the time slots (S1 to S4) to the subscriber stations (10; 20; 30; 1 to 4) remains unchanged in the subsequent rounds (C), as a result of which the transmission sequence is unchanged in the subsequent rounds (C) .

## Revendications

1. Poste d'abonné (10 ; 20 ; 30 ; 1 à 4) pour un système de bus série (100), comprenant
un dispositif de commande de communication (11 ; 21 ; 31) pour commander une communication du poste d'abonné (10 ; 20 ; 30 ; 1 à 4) avec au moins un autre poste d'abonné (10 ; 20 ; 30 ; 1 à 4) du système de bus (100),
un dispositif d'émission/réception (12 ; 22 ; 32) pour émettre un signal d'émission (TX1 ; TX2 ; TX3 ; TX4) généré par le dispositif de commande de communication (11 ; 21 ; 31) dans une trame (450 ; 460) sur un bus (40) du système de bus (100), et
une unité de planification temporelle (15 ; 25 ; 35) pour planifier un accès temporel du poste d'abonné (10 ; 20 ; 30 ; 1 à 4) au bus (40) dans au moins un créneau temporel (S1 à S4) d'un cycle (C) de créneaux temporels (S1 à S4) consécutifs dans le temps,
dans lequel au moins un créneau temporel (S1 à S4) est prévu dans un cycle (C) pour chaque poste d'abonné (10 ; 20 ; 30 ; 1 à 4) du bus (40) pour l'émission de son signal d'émission (TX1 ; TX2 ; TX3 ; TX4), et le cycle (C) se répète de manière cyclique, et
dans lequel, dans un cycle de départ (C_SU) après la mise sous tension du système de bus (1) ou après une mise en veille et un réveil d'un des postes d'abonné (10 ; 20 ; 30 ; 1 à 4), en utilisant une priorité du signal d'émission (TX1 ; TX2 ; TX3 ; TX4) pour des cycles suivants (C) du cycle (C) qui se répète de manière cyclique, l'unité de planification temporelle (15 ; 25 ; 35) est conçue pour définir avec les autres postes d'abonné (10 ; 20 ; 30 ; 1 à 4) du bus (40) en cours de fonctionnement du système de bus (100) quel créneau temporel (S1 à S4) du cycle de départ (C_SU) le dispositif d'émission/réception (12 ; 22 ; 32) peut utiliser pour l'émission de la trame (450 ; 460) pour le signal d'émission (TX1 ; TX2 ; TX3 ; TX4) sur le bus (40),
dans lequel l'attribution des créneaux temporels (S1 à S4) aux postes d'abonné (10 ; 20 ; 30 ; 1 à 4) reste inchangée dans les cycles suivants (C) de sorte que la séquence d'émission reste inchangée dans les cycles suivants (C).

2. Poste d'abonné (10 ; 20 ; 30 ; 1 à 4) selon la revendication 1, dans lequel l'unité de planification temporelle (15 ; 25 ; 35) est conçue pour définir avec les autres postes d'abonné (10 ; 20 ; 30 ; 1 à 4) du bus (40) une séquence d'émission sur le bus (40) pour les postes d'abonné (10 ; 20 ; 30 ; 1 à 4) du bus (40) au moins temporairement de façon dynamique et/ou au moins temporairement de façon statique.

3. Poste d'abonné (10 ; 20 ; 30 ; 1 à 4) selon la revendication 1 ou 2,
dans lequel l'unité de planification temporelle (15 ; 25 ; 35) présente un module de comptage (151 ; 251 ; 351) qui est conçu pour incrémenter sa valeur de comptage à chaque trame (450 ; 460) reçue par le bus (40) et pour l'incrémenter à chaque opportunité d'émission (TO) manquée pour un créneau temporel (S1, S2, S3, S4), et
dans lequel le module de comptage (151 ; 251 ; 351) est conçu pour réinitialiser sa valeur de comptage à une valeur initiale si la valeur de comptage est égale au nombre des créneaux temporels (S1 à S4) qui sont prévus dans le cycle (C).

4. Poste d'abonné (10 ; 20 ; 30 ; 1 à 4) selon la revendication 3, dans lequel le module de comptage (151 ; 251 ; 351) est conçu pour incrémenter sa valeur de comptage à chaque trame (450 ; 460) reçue par le bus (40) après réception d'un bit signalant le début d'une trame (450 ; 460) même si la trame (450 ; 460) sera ultérieurement abandonnée par le poste d'abonné (10 ; 20 ; 30 ; 1 à 4) émettant la trame (450 ; 460) en raison d'une erreur.

5. Poste d'abonné (10 ; 20 ; 30 ; 1 à 4) selon la revendication 3 ou 4,
dans lequel l'unité de planification temporelle (15 ; 25 ; 35) est conçue pour valider un accès temporel du poste d'abonné (10 ; 20 ; 30 ; 1 à 4) au bus (40) pour le créneau temporel (S1 à S4) suivant du cycle (C) si la valeur de comptage du module de comptage (151 ; 251 ; 351) est égale au nombre des créneaux temporels (S1 à S4) qui sont prévus dans le cycle (C), et
dans lequel le module de comptage (151 ; 251 ; 351) est conçu pour mettre sa valeur de comptage sur 1 si le dispositif d'émission/réception (12 ; 22 ; 32) a émis un signal d'émission (TX1 ; TX2 ; TX3 ; TX4) généré par le dispositif de commande de communication (11 ; 21 ; 31) dans une trame (450 ; 460) sur le bus (40) ou laisse passer l'opportunité d'émission (TO).

6. Poste d'abonné (10 ; 20 ; 30 ; 1 à 4) selon l'une quelconque des revendications précédentes, dans lequel l'unité de planification temporelle (15 ; 25 ; 35) est conçue pour valider un accès temporel du poste d'abonné (10 ; 20 ; 30 ; 1 à 4) au bus (40) dans un créneau temporel (S1 à S4) du cycle (C) si le poste d'abonné (10 ; 20 ; 30 ; 1 à 4) ou un autre poste d'abonné (10 ; 20 ; 30 ; 1 à 4) du bus (40) laisse passer son opportunité d'émission (TO).

7. Poste d'abonné (10 ; 20 ; 30 ; 1 à 4) selon l'une quelconque des revendications précédentes,
dans lequel le dispositif de commande de communication (11 ; 21 ; 31) est conçu au moins dans une phase de mise sous tension (C_E) du bus (40) pour diviser la trame (450 ; 460) en une première phase de communication (451) et une deuxième phase de communication (452), et
dans lequel dans la première phase de communication (451) on négocie lequel des postes d'abonné (10, 20, 30) du bus (40) recevra dans la deuxième phase de communication (452) suivante un accès au bus (40) sans collision, au moins temporairement exclusif.

8. Poste d'abonné (10 ; 20 ; 30 ; 1 à 4) selon la revendication 7,
dans lequel le nombre (SN) des créneaux temporels (S1 à S4) par cycle (C) est supérieur au nombre des créneaux temporels (S1 à S4) qui sont attribués aux postes d'abonné (10 ; 20 ; 30 ; 1 à 4) du bus (40) par cycle (C), et
dans lequel dans un créneau temporel (S5) qui n'est attribué à aucun des postes d'abonné (10 ; 20 ; 30 ; 1 à 4) du bus (40), dans la première phase de communication (451) on négocie lequel des postes d'abonné (10, 20, 30) du bus (40) recevra dans la deuxième phase de communication (452) suivante un accès au bus (40) sans collision, au moins temporairement exclusif.

9. Poste d'abonné (10 ; 30) selon la revendication 7 ou 8,
dans lequel la durée minimale d'un créneau temporel (S1 à S4) est un temps de bit d'un bit de la première phase de communication (451), et
dans lequel l'unité de planification temporelle (15 ; 25 ; 35) est en option conçue pour émettre dans un créneau temporel (S1 à S4) qui est attribué au poste d'abonné (10 ; 20 ; 30 ; 1 à 4) une trame (450 ; 460) d'une priorité qui est supérieure à une priorité d'une trame (450 ; 460) pour laquelle l'unité de planification temporelle (15 ; 25 ; 35) est conçue pour l'émettre dans un créneau temporel (S1 à S4) qui est attribué à un autre poste d'abonné (10 ; 20 ; 30 ; 1 à 4) du bus (40).

10. Poste d'abonné (10 ; 30) selon la revendication 7 ou 8,
dans lequel la durée minimale d'un créneau temporel (S1 à S4) correspond à deux temps de bit d'un bit de la première phase de communication (451), et
dans lequel l'unité de planification temporelle (15 ; 25 ; 35) est conçue pour valider un accès temporel du poste d'abonné (10 ; 20 ; 30 ; 1 à 4) au bus (40) dans le deuxième bit (B2_S1) d'un créneau temporel (S1 à S4) du cycle (C) si un autre poste d'abonné (10 ; 20 ; 30 ; 1 à 4) du bus (40) laisse passer son opportunité d'émission (TO) dans le premier bit (B1_S1) du créneau temporel (S1 à S4).

11. Poste d'abonné (10 ; 20 ; 30 ; 1 à 4) selon l'une quelconque des revendications précédentes,
dans lequel le dispositif de commande de communication (11 ; 21 ; 31) est conçu pour disposer dans le signal d'émission (TX1 ; TX2 ; TX3 ; TX4) un numéro de postes d'abonné qui est attribué sur le bus (40) exclusivement au poste d'abonné (10 ; 20 ; 30 ; 1 à 4), et
dans lequel l'unité de planification temporelle (15 ; 25 ; 35) est prête à valider un accès temporel du poste d'abonné (10 ; 20 ; 30 ; 1 à 4) au bus (40) dans le créneau temporel (S1 à S4) du cycle (C) attribué au poste d'abonné (10 ; 20 ; 30 ; 1 à 4) si l'unité de planification temporelle (15 ; 25 ; 35) peut évaluer un numéro de poste d'abonné dans une trame (450 ; 460) reçue par le bus.

12. Poste d'abonné (10 ; 20 ; 30 ; 1 à 4) selon l'une quelconque des revendications précédentes, dans lequel le nombre des créneaux temporels (S1 à S4) qui sont attribués au poste d'abonné (10 ; 20 ; 30 ; 1 à 4) par cycle (C) est au moins temporairement différent d'un nombre de créneaux temporels (S1 à S4) qui sont attribués à un autre poste d'abonné (10 ; 20 ; 30 ; 1 à 4) du bus (40) par cycle (C).

13. Poste d'abonné (10 ; 20 ; 30 ; 1 à 4) selon l'une quelconque des revendications précédentes,
dans lequel le poste d'abonné (10 ; 20 ; 30 ; 1 à 4) est conçu pour émettre plus d'une trame (450 ; 460) sur le bus (40) par créneau temporel (S1 à S4), et/ou
dans lequel le nombre de trames (450 ; 460) que le poste d'abonné (10 ; 20 ; 30 ; 1 à 4) peut émettre sur le bus (40) par créneau temporel (S1 à S4) est au moins temporairement différent d'un nombre de trames (450 ; 460) qu'un autre poste d'abonné (10 ; 20 ; 30 ; 1 à 4) du bus (40) peut émettre sur le bus (40) par créneau temporel (S1 à S4).

14. Poste d'abonné (10 ; 20 ; 30 ; 1 à 4) selon l'une quelconque des revendications précédentes, dans lequel le dispositif de commande de communication (11 ; 21 ; 31) est conçu pour émettre au début d'un bit récessif dans le créneau temporel attribué au poste d'abonné une impulsion dominante (P) qui est plus courte que le temps de bit du bit récessif (B1_S1) si le dispositif de commande de communication (11 ; 21 ; 31) laisse passer son opportunité d'émission (TO).

15. Poste d'abonné (10 ; 20 ; 30 ; 1 à 4) selon l'une quelconque des revendications précédentes, dans lequel le poste d'abonné (10 ; 20 ; 30 ; 1 à 4) est conçu de telle sorte que l'unité de planification temporelle (15 ; 25 ; 35) peut être mise sous ou hors tension selon des exigences temporelles au niveau de la communication sur le bus (40), ou qu'un mode de fonctionnement de l'unité de planification temporelle (15 ; 25 ; 35) peut être modifié par la configuration de paramètres prédéterminés (SN, W) en cours de fonctionnement du système de bus (100), dans lequel le mode de fonctionnement de l'unité de planification temporelle (15 ; 25 ; 35) définit un mode prédéterminé d'une communication sur le bus (40).

16. Système de bus (1), comprenant
un bus (40), et
au moins deux postes d'abonné (10 ; 20 ; 30 ; 1 à 4) selon l'une quelconque des revendications précédentes,
dans lequel les au moins deux postes d'abonné (10 ; 20 ; 30 ; 1 à 4) sont reliés les uns aux autres par le bus (40) de façon à pouvoir effectuer une communication série les uns avec les autres.

17. Procédé de communication dans un système de bus série (100), dans lequel le procédé est effectué par un poste d'abonné (10 ; 20 ; 30 ; 1 à 4) du système de bus (100) qui présente un dispositif de commande de communication (11 ; 21 ; 31) et un dispositif d'émission/réception (12 ; 22 ; 32), le procédé présentant les étapes consistant à,
commander, par un dispositif de commande de communication (11 ; 21 ; 31), une communication du poste d'abonné (10 ; 20 ; 30 ; 1 à 4) avec au moins un autre poste d'abonné (10 ; 20 ; 30 ; 1 à 4) du système de bus (100), et
émettre, par un dispositif d'émission/réception (12 ; 22 ; 32), un signal d'émission (TX1 ; TX2 ; TX3 ; TX4) généré par le dispositif de commande de communication (11 ; 21 ; 31) dans une trame (450 ; 460) sur un bus (40) du système de bus (100) selon la planification d'une unité de planification temporelle (15 ; 25 ; 35) qui planifie un accès temporel du poste d'abonné (10 ; 20 ; 30 ; 1 à 4) au bus (40) dans au moins un créneau temporel (S1 à S4) d'un cycle (C) de créneaux temporels (S1 à S4) consécutifs dans le temps,
dans lequel dans un cycle (C), pour chaque poste d'abonné (10 ; 20 ; 30 ; 1 à 4) du bus (40), au moins un créneau temporel (S1 à S4) est prévu pour émettre son signal d'émission (TX1 ; TX2 ; TX3 ; TX4), et le cycle (C) se répète de manière cyclique, et
dans lequel, dans un cycle de départ (C_SU) après la mise sous tension du système de bus (1) ou après une mise en veille et un réveil d'un des postes d'abonné (10 ; 20 ; 30 ; 1 à 4), en utilisant une priorité du signal d'émission (TX1 ; TX2 ; TX3 ; TX4) pour des cycles suivants (C), l'unité de planification temporelle (15 ; 25 ; 35) définit avec les autres postes d'abonné (10 ; 20 ; 30 ; 1 à 4) du bus (40) en cours de fonctionnement du système de bus (100), en utilisant une priorité du signal d'émission (TX1 ; TX2 ; TX3 ; TX4), quel créneau temporel (S1 à S4) du premier cycle (C) le dispositif d'émission/réception (12 ; 22 ; 32) peut utiliser pour l'émission de la trame (450 ; 460) pour le signal d'émission (TX1 ; TX2 ; TX3 ; TX4) sur le bus (40),
dans lequel l'attribution des créneaux temporels (S1 à S4) aux postes d'abonné (10 ; 20 ; 30 ; 1 à 4) reste inchangée dans les cycles suivants (C) de sorte que la séquence d'émission reste inchangée dans les cycles suivants (C).
